# EUROPEAN PATENT SPECIFICATION

(11) **EP 4 402 916 B1**
(45) Date of publication and mention of the grant of the patent: **14.05.2025**
(21) Application number: 22717731.8
(22) Date of filing: 17.03.2022
(51) Int. Cl.: H04W 4/80, H04W 84/12

(54) **MULTI-AP COORDINATION TO UTILIZE WIFI SIGNALS EFFICIENTLY FOR WIFI SENSING**
MULTI-AP-KOORDINATION ZUR EFFIZIENTEN VERWENDUNG VON WIFI-SIGNALEN FÜR WIFI-ERFASSUNG
COORDINATION MULTI-AP POUR UTILISER EFFICACEMENT DES SIGNAUX WIFI POUR UNE DÉTECTION WIFI

(30) Priority: 17.08.2021 TR 202112978
(43) Date of publication of application: 24.07.2024
(73) Proprietor: Vestel Elektronik Sanayi ve Ticaret A.S., 45030 Manisa (TR)
(72) Inventor: AYGÜL, Mehmet Ali, 34810 Istanbul (TR); TÜRKMEN, Halise, 34810 Istanbul (TR); ARSLAN, Hüseyin, 34810 Istanbul (TR)
(74) Representative: Grünecker Patent- und Rechtsanwälte PartG mbB
(86) International application number: PCT/EP2022/057028
(87) International publication number: WO 2023/020719

(56) References cited:
- SANG KIM (LGE): "Collaborative WLAN Sensing", vol. 802.11 SENS, 25 September 2020 (2020-09-25), pages 1 - 13, XP068173523, Retrieved from the Internet <URL:https://mentor.ieee.org/802.11/dcn/20/11-20-1533-00-SENS-collaborative-wlan-sensing.pptx> [retrieved on 20200925]

## Description

The present disclosure relates to scheduling of sensing signals for two or more wireless devices.

### BACKGROUND

Wireless communication has been advancing over several decades now. Exemplary notable standards organizations include the 3rd Generation Partnership Project (3GPP) and IEEE 802.11, commonly referred to as Wi-Fi.

Cognitive radio is one of the emerging technologies for exploiting the system spectrum. Cognitive radio devices are supposed to dynamically use the best wireless channels in their vicinity to improve spectrum efficiency. In order to achieve this, spectrum occupancy information may be desirable to help modeling and predicting the spectrum availability for efficient dynamic spectrum access. Spectrum occupancy prediction may be based on using the information on previous spectrum occupancy to predict future occupancy. Such a prediction is based on exploiting the inherent correlation between past and future occupancies. Some approaches exploit time-domain correlation and thus cast spectrum prediction as a time-series prediction. Some approaches additionally consider exploiting the correlation along the frequency axis, and thus exploit time-frequency correlation. Correlation may also exist in the spatial domain. Thus, exploiting the correlation in all mentioned domains may be desirable.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring.

Sang Kim: "Collaborative WLAN Sensing", IEEE Draft; 11-20-1533-00-SENS-collaborative-wlan-sensing, 2020-09-25, IEEE-SA mentor, Piscataway, NJ USA, relates to applications and observations regarding WLAN Sensing.

### SUMMARY

The present invention relates to methods and apparatuses for scheduling of sensing signals for two or more wireless devices.

The invention is defined by the scope of the independent claims. Some of the advantageous embodiments are provided in the dependent claims.

According to an embodiment, a method is provided for scheduling sensing signals for two or more wireless devices , comprising: determining requirements of sensing performance from the two or more wireless devices; determining existing sensing signals being transmitted by the two or more wireless devices; determining one or more groups of wireless devices having similar requirements of sensing performance, each group comprising one or more wireless devices of the two or more wireless devices; for each group, comparing features of existing sensing signals with respective requirements of sensing performance; providing information about the existing sensing signals to a group out of the one or more groups of wireless devices, if the predetermined requirements for the group are fulfilled.

According to an embodiment, a wireless device is provided for scheduling sensing signals, comprising: processing circuitry configured to determine requirements of sensing performance from two or more wireless devices; determine existing sensing signals being transmitted; determine one or more groups of wireless devices having similar requirements of sensing performance, each group comprising one or more wireless devices of the two or more wireless devices; for each group, compare features of existing sensing signals with respective requirements of sensing performance; a transceiver configured to transmit information about the existing sensing signals to a group out of the one or more groups of wireless devices, if the predetermined requirements for the group are fulfilled.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- Fig. 1: is a block diagram illustrating a basic communication system;
- Fig. 2: is a block diagram illustrating a scheduling device with a plurality of wireless devices of various types;
- Fig. 3: is a schematic drawing illustrating various frame format depending on whether the application generating the frame is sensing, communication of JSC;
- Fig. 4a: is a schematic drawing illustrating a simple sensing scenarios in absence of objects to be detected;
- Fig. 4b: is a schematic drawing illustrating a simple sensing scenarios in presence of objects to be detected;
- Fig. 5a: is a schematic drawing illustrating a sensing scenario with multiple devices communicating and sensing via line of sight;
- Fig. 5b: is a schematic drawing illustrating a sensing scenario with multiple devices communicating and sensing via non line of sight;
- Fig. 6a: is a schematic drawing illustrating the training phase of a machine learning model;
- Fig. 6b: is a schematic drawing illustrating the testing phase of a machine learning model;
- Fig. 7a: is an exemplary illustration of multiple sensing sessions without AP-coordination;
- Fig. 7b: is an exemplary illustration of multiple sensing sessions with AP-coordination;
- Fig. 8: is a flow diagram illustrating non-collaborative sensing signal sharing;
- Fig. 9: is a schematic drawing illustrating AP coordinated sensing signal sharing;
- Fig. 10: is an illustration of a sensing application registry for a Multi-AP coordinated sensing signal sharing in a standalone network;
- Fig. 11: is an illustration of a sensing application registry and a device sensing capability registry for a Multi-AP coordinated sensing signal sharing in a enterprise network;
- Fig. 12: illustrates a sensing transmission control architecture;
- Fig. 13: is a flow diagram illustrating an initialization of an REM for sensing session detection and identification;
- Fig. 14: is a flow diagram illustrating a new sensing session request or a sensing parameter negotiation request;
- Fig. 15: is a flow diagram illustrating a sensing session time-out or termination;
- Fig. 16: is a flow diagram illustrating a new STA entering the environment;
- Fig. 17: is a flow diagram illustrating a STA leaving the environment;
- Fig. 18: is a flow diagram illustrating an AP entering the environment or an AP status update;
- Fig. 19a: is an exemplary illustration of multi-AP coordination of four APs;
- Fig. 19b: is an exemplary illustration of multi-AP coordination of four APs when a new STA enters the environment;
- Fig. 20a: is an exemplary illustration of multi-AP coordination of three APs;
- Fig. 20b: is an exemplary illustration of multi-AP coordination when a new AP enters the environment;
- Fig. 21a: is a block diagram illustrating an exemplary apparatus for sensing signal sharing;
- Fig. 21b: is a block diagram illustrating an exemplary apparatus training a module for sensing signal sharing.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

Although the aforementioned techniques may be successful in some cases, they do not provide full information or awareness about the future spectrum or its usage. Meanwhile, wireless sensing is gaining popularity in commercial devices, for environment monitoring, health monitoring, and numerous other applications. Military use of wireless sensing such as radar has always been popular. Sensing applications generate signals, which may typically have a pattern different from those of some communication applications. For instance, most wireless sensing applications generate periodic signal transmissions of varying periodicity. Effectively scheduling and managing these transmissions would result in less spectrum and power wastage. Therefore, if a device can determine which sensing application is utilizing the spectrum, it can either plan its own transmissions such that they fall in the empty slots or utilize these transmissions for its own sensing, if they are suitable.

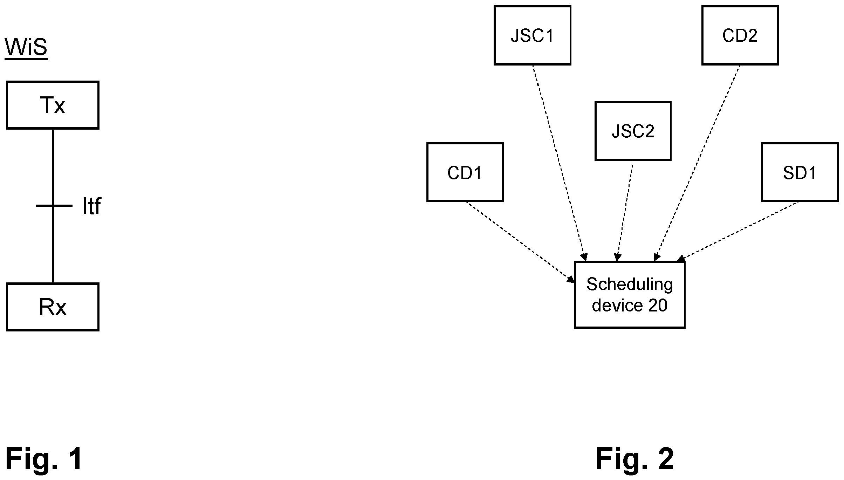

**Fig. 1** illustrates an exemplary wireless system WiS in which Tx represents a transmitter and Rx represents a receiver of the wireless signal. The transmitter Tx is capable of transmitting a signal to the receiver Rx or to a group of receivers or to broadcast a signal over an interface Itf. The interface may be any wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated into the same device. In other words, the devices Tx and Rx in Fig. 1 may respectively also include the functionality of the Rx and Tx.

The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11be or the like. The wireless signal is not necessarily a communication signal in the sense that it does not necessarily carry out human or machine communication. It may be, in particular, a sensing signal such as a radar signal or sounding a signal or any other kind of wireless signal from a sensing device such as some signal reporting sensing results to another device(s).

For instance, the amendment IEEE 802.11bf - Wireless Local Area Network (WLAN) Sensing - may include support for wireless sensing in WLAN networks. Some embodiments may be used to enhance the performance of devices complying with this standard, e.g. to reduce the amount of redundant sensing signals in an area or a network. The fifth-generation (5G) New Radio (NR) standard, 6G standards or other future standards may also apply wireless sensing as its part of future cellular communications networks. Some embodiments of the present disclosure may help to predict the empty spaces in the licensed-exempt spectrum during opportunistic spectrum usage, where most wireless sensing is expected to take place. The present disclosure is also applicable to other communication technologies such as 3G or communication technologies under long-term evolution (LTE)/LTE Unlicensed (LTE-U).

As mentioned above, spectrum awareness is an important part of cognitive radio (CR). Some embodiments of the present disclosure may facilitate the identification and prediction of sensing transmissions. The IEEE 802.22 and IEEE 802.15 standard support CR and may thus profit from the present disclosure. The present disclosure is also applicable to low-power wide-area network (LPWAN) technologies, as it aids in increasing power efficiency through reducing the number of redundant sensing transmissions. Thus, it is related to LPWAN standards such as Wize, ZigBee, NarrowBand IoT, and LoRaWAN. In general, some embodiments can be used in high frequencies - or millimeter waves (mm-waves) - as the spectrum availability and propagation characteristics are suitable for high-resolution wireless sensing. It can be used for managing resources for wireless sensing.

There may be separate devices including the functionality of the Rx and Tx, respectively. The transmitter Tx and receiver Rx may be implemented in any device such as a base station (eNB, AP) or terminal (UE, STA), or in any other entity of the wireless system WiS. A device such as a base station, access point, or terminal may implement both Rx and Tx. The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11be or the like. Sensing applications signals may also be embedded within resources provided by one or more or the known systems such as some IEEE 802.11 standards or their possible specific extensions for supporting sensing applications.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring, and much more. Wireless sensing applications may require periodic or continuous sensing transmissions. However, allowing all sensing/sensing capable devices to transmit their own sensing transmissions may reduce spectral efficiency and degrade the performance of networks operating in the license-exempt bands. Additionally, because sensing transmissions are periodic, there is a strong likelihood that they will cause interference to communication transmissions if they are scheduled opportunistically, or if they have opportunistic channel access mechanisms. This problem can be solved by including sensing-aware channel access and sensing coordination protocols in the standards. However, these would only enable communication and coordination for sensing and devices within the same network. At the same time, this would increase control signalization overhead and complexity. Wireless communication trends are heading towards decentralized and minimum-coordination networks, with the coexistence of a larger number of wireless networks in the same area. As such, methods to identify and predict, or the act of identifying and predicting, future sensing transmissions before transmitting are required in the standards. This would allow devices to better allocate their resources and schedule their transmissions.

Wireless sensing is a process of obtaining information or awareness of the environment through measurements on received (e.g. reflected or directly received) electromagnetic signals. In this definition, processes such as spectrum/channel sensing, radar, joint radar and communication, WLAN sensing, and other methods can be considered as wireless sensing methods. Most wireless sensing methods have either periodic or continuous transmission patterns. An example could be a radar, where a continuous signal or periodic pulses are transmitted. Another example could be channel state information (CSI) based WLAN sensing, where packets are transmitted with some periodicity.

For example, important signal characteristics for radar-based sensing may include periodicity, bandwidth, frequency, number of antennas and/or training sequences. In the CSI-based sensing, important signal characteristics may include, for example, periodicity, bandwidth, frequency and/or number of antennas.

The sensing transmissions may have a specific frame design or transmission mechanism, which is specific for some sensing application(s) and may vary based on the sensing application requirements and environment conditions. Periodicity is an important condition for sensing applications, as disruptions in the periodicity of transmitted/received signals due to interference from other devices, the inability to schedule transmissions, or access the channel using channel access protocols may cause a disruption of measurements. This may cause false alarms, missed detections, reduced resolution of sensed information, overall performance degradation of the sensing application. Depending on the application, this could have severe monetary consequences or life risks.

Signal identification allows devices to identify some features of a signal, such as wireless technology (LTE, 5G, etc.), waveform, modulation type, etc., based on some characteristics of the signals, such as bandwidth, spectrogram image, etc. There are some applications in which certain characteristics are identified for the purpose of synchronization or authentication. Also, spectrum sensing is known, which is used to identify primary users' spectrum occupancy status. However, it may require continuous spectrum sensing. Alternatively, spectrum prediction techniques can be used to save time, energy, and computation overheads required by spectrum sensing.

In future wireless communications, there may be several wireless sensing applications. Generally, sensing applications use continuous signals (with some periodicity), which may degrade the spectral efficiency drastically. This is especially the case where numerous sensing applications/devices are used at the same time and/or in the same area.

Some embodiments and exemplary implementations provide methods and apparatuses for scheduling of sensing signals for two or more wireless devices. Transmissions may be scheduled accordingly without interfering with other applications or utilize the present sensing transmissions for their own sensing applications. Thereby, the spectrum, power, and other resources can be used efficiently.

Scheduling of transmissions may be performed by a scheduling device 20, as shown in **Fig. 2****.** The scheduling device 20 may receive a request for scheduling a transmission of a signal by a wireless device. The wireless device may be a communication device, a sensing device, or a joint sensing and communication (JSC) device. Fig. 2 shows a plurality of various devices to request resources for signal transmission from the scheduling device 20. In particular, the plurality of devices includes communication devices CD1 and CD2, JSC devices JSC1 and JSC2, as well as a sensing device SD1. In general, a communication device is a device configured to run an application which makes use of wireless communication, such as a communication according to a wireless standard.

Sensing devices have wireless sensing functionality. They are configured to run a sensing application. These devices may be also configurable or configured to perform wireless communication to transmit their sensed measurements, which is typically a small amount of data compared to amounts of data transmitted by usual communication applications or devices. In the sensing, measurements are taken as the parameters (features) which can be extracted from the wireless signal received, whether directly or after some processing. Some non-limiting examples of measured parameters include received signal strength indicator (RSSI), channel state information (CSI), range, velocity, or the like.

JSC devices are configured to run both the communication application(s) and the sensing application(s). For example, the main function of the JSC devices may be communication, meaning they may have a large amount of data to transmit, but they can perform wireless sensing as well, to improve communication performance or for a user application, such as navigation, or the like. For example, the main function of the JSC devices may be sensing, but they can perform communication as well. The importance of sensing and communication may be equal.

Some non-limiting examples of sensing devices include smart bands, non-invasive medical sensors, such as heart rate monitors, body mass monitors, or the like. Non-limiting examples of applications supported (implemented) by JSC devices include object tracking and/or user tracking for beam management, physical layer security through physical user (human) identification, or the like. Non-limiting exemplary devices include cellphones, laptops, tablets, access points (APs), or the like.

### Wireless sensing applications and characteristics

A sensing session may be composed of one or more of the following phases: setup phase, measurement phase, reporting phase, and termination phase. In the setup phase of a sensing session, a sensing session is established, and operational parameters associated with the sensing session are determined and may be exchanged between STAs. In the measurement phase of a sensing session, sensing measurements are performed. In the reporting phase of a sensing session, sensing measurement results are reported. In the termination phase of a sensing session, STAs stop performing measurements and terminate the sensing session.

When more than one independent device is involved in the sensing process (i.e. collaborative wireless sensing), sensing may be performed after some planning by the involved devices. An initiating station (ISTA) is the device which may initiates the wireless sensing process, generally by requesting some resources (transmissions, measurements, etc.) from other devices. A responding station (RSTA) may respond to the ISTA by transmitting sensing transmissions and/or making measurements on sensing signals transmitted by other RSTA and/or making spectrum measurements. These measurements may be communicated to the ISTA or some processor (which in turn will communicate the results of the sensing to the ISTA or sensing requesting application associated with the ISTA).

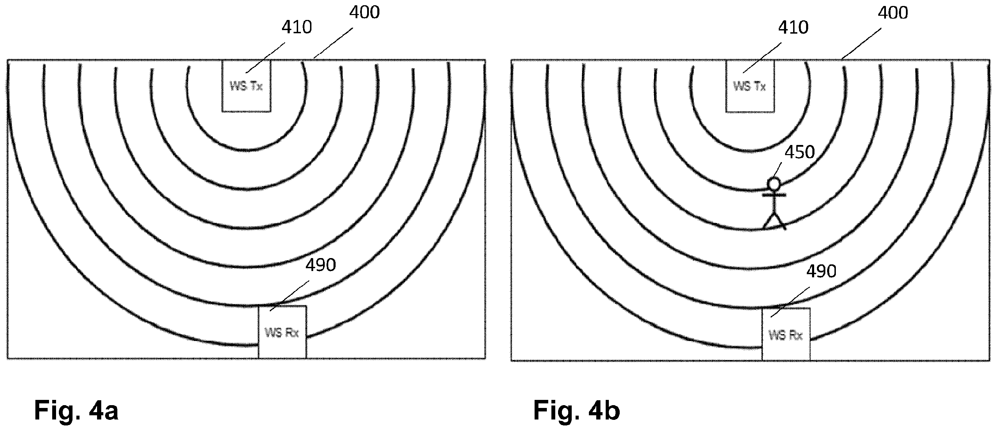

Fig. 4a and 4b show an illustration of a generic sensing application. Here, wireless sensor (WS) transmitter (Tx) 410 is the wireless sensor transmitter and WS receiver (Rx) 490 is the wireless sensor receiver. The WS Tx and WS Rx are synchronized, and may coordinate with each other, either through wireless signalization or via a wired connection. The WS Tx 410 and the WS Rx 490 are located in a limited area, such as a room 400. The concentric circle portions illustrate the electromagnetic field (wireless sensing signal) generated by the WS Tx 410. As can be seen in the figure, the WS Rx 490 is in the range of the wireless sensing signal. As discussed above, the wireless sensing signal may be a sensing pulse or continuous signal such as radar or a sounding signal. However, it may be also reporting of a regular measurement in a packet form or the like.

**Fig. 4a** is only an example configuration of wireless sensing hardware. Other configurations could include more than one transmitters and/or more than one receivers, transceivers, etc. Here, the term transceiver denotes a receiver or a transmitter or a combination of both. Initially, the WS Tx 410 may transmits the sensing signals when there is nothing to be detected (there is no object in the monitored object size range), as shown in Fig. 4a. The WS Rx 490 receives these sensing signals and takes measurements, for example, CSI or any signal strength indicating measurements. Then, when there is something to be detected, which is shown as a stick man 450 in **Fig. 4b****,** the changes in the measurement indicates that. In other words, the presence of the object 450 changes the channel and thus, the received signal, which can be detected at WS Rx 490. It is noted that this is only an example in which there are cooperating transmitter and receiver WS. However, the present disclosure is not limited thereto and instead of detecting signal transmitted from a certain transmitter located in a position different from the position of the receiver, some sensing applications may rely on a transceiver including co-located transmitter and receiver, such as a pulse radar in which case the signal detected is a signal reflected from the detected object.

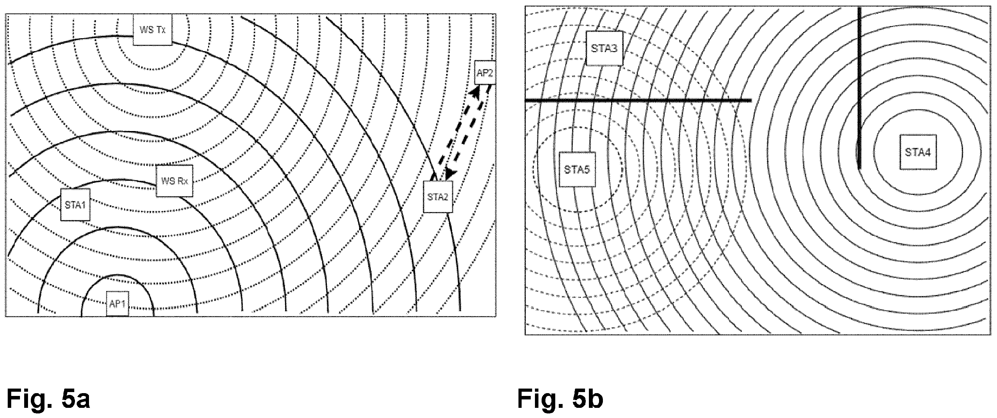

**Fig. 5a and 5b** show further different exemplary sensing scenarios. The different devices performing sensing and communication in the region can be solely sensing devices, shown as WS Tx and WS Rx. Alternatively, or in addition, the sensing may be performed between APs (or other network controllers/coordinators) and stations (STA)s, or between STAs and other STAs. At the same time, other network devices can be communicating. The sensing devices may be line of sight (LOS), as shown in Fig. 5, or non-line of sight (nLOS), as shown in Fig. 5b. For example, in Fig. 5, a WS Tx transmits a first sensing signal (dotted line). An AP1 transmits another sensing signal (solid line). STA1 may receive the sensing signal from the AP1 whereas WS Rx may receive the sensing signal from the WS Tx. However, the STA1 may also use the sensing signal from WS Tx and the WS Rx may also receive the sensing signal from the AP1 in some scenarios. Here, by receiving, what is meant is detecting as present and possibly processing further, i.e. not merely receiving as a part of noise. Moreover, AP2 and STA2 are in communication with each other, i.e. exchange communication signal. All these devices are in LoS in this simplified example. Some or all of these devices may operate in the same or at least partially overlapping spectrum.

As shown in the figures, the sensing signals may have different periodicity (indicated by different density of the concentric circle portions illustrating the sensing signal). In this case, identifying the sensing applications without direct communication or coordination with another wireless device may be beneficial. In response to the detection of a sensing signal, the devices can use signals, which are suitable for them rather than transmitting their own sensing signals. For example, once the STA1 detects that WS Tx is transmitting a sensing signal, it may use the sensing signal in addition or alternatively to the sensing signal from the AP1. It is even possible that AP1 detects sensing signal from WS Tx and stops transmitting own sensing signal, since one sensing signal may be sufficient. Or, vice versa, WS Tx detects that AP1 transmits a sensing signals and stops own transmission of the sensing signal. As is clear to those skilled in the art, various implementations of coordination and adaption of the sensing environment may be provided once the sensing applications (signals from sensing applications) have been detected in an area.

Fig. 5b shows a scenario in which there is not necessarily a LoS between some or all of the devices. In the figure, in fact none of the devices STA3, STA4, and STA5 present in the sensing area has a LoS to the other devices. Nevertheless, still, sensing signals may be received at the sensing signal receiving devices. E.g. STA5 has no LoS to STA3 and STA4, but may still receive their sensing signal. Thus, STA5 may decide to switch off the own signal and use the sensing signal of STA4 or STA3 or the like. Using the sensing application identification and prediction technique discussed above, devices can learn which sensing application the signals are for, predict their duration and future spectrum usage and either schedule their own signals such that there is no interference (resource allocation) or utilize these signals for their own sensing application.

In the above description, some particular examples were given. However, the present disclosure is not limited to those examples. Rather, variations and modifications may be advantageous for some scenarios. For example, any features that are different for sensing and communication signals can be used to differentiate them, such as frame structure, periodicity, resolution, RSS/RSSI values, or some features of the sensing that will be defined in the future standards, such as periodic channel access mechanisms, back-off behavior, special sensing sequences or waveforms, or the like. The RSS/RSSI can be used instead of PSD for detecting spectrum occupancy and/or for measurement of the signal to determine whether it is a communication or a sensing signal or to determine the sensing application which originated said signal. For example, the RSS/RSSI measurement is available effortlessly in most communication devices and can give a rough quantification of user activity, i.e., spectrum usage. The term "user" here refers more broadly to a particular application running on a device.

Some embodiments of the present disclosure may be used for applications such as home surveillance or home appliances or entertainment.

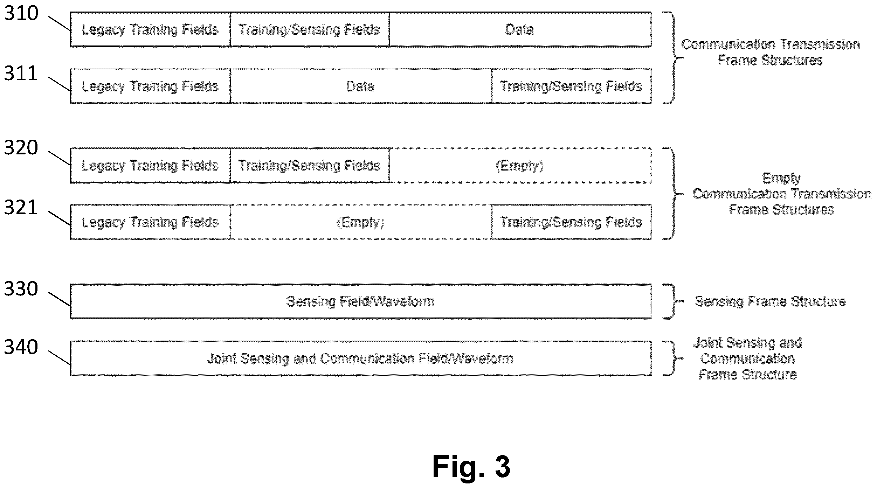

Different sensing applications may require different characteristics of the sensing signal. Some characteristics of the signal are, for example, bandwidth (BW), sensing duration, sensing start time, sensing end time, waveform, periodicity, carrier frequency, power, beam width, beam sweep rate, training sequences, pilot placement, or the like. Exemplary frame structures such as communication transmission frame structures 310, 311, empty communication frame structures 320, 321, sensing frame structures 330 and joint sensing and communication frame structures 340 are shown in **Fig. 3****.**

There may be numerous communicating devices in all frequency bands. To summarize, the sensing elements and example parameters for an exemplary scenario may be as listed below:
(Mobile) Autonomous Vehicles:
   ∘ Single transceiver
   ∘ FMCW radar waveform
   ∘ Frequency = 6 GHz
   ∘ Bandwidth (BW) = 40 MHz
   ∘ Periodicity = 100 pkts/s
(Stationary) Roadside Unit:
   ∘ Single transceiver
   ∘ FMCW radar waveform
   ∘ Frequency = 60 GHz
   ∘ BW = 1 GHz
   ∘ Periodicity = 100 pkts/s
Home Monitoring:
   ∘ 2 APs and 5 sensing/responding nodes
   ∘ Wi-Fi Physical-layer Protocol Data Unit (PPDU) frame format
   ∘ Frequency = 2.4 GHz
   ∘ BW = 20 MHz
   ∘ Periodicity = 100 pkts/s
Sleep Monitoring
   o 1 transmitter and 1 receiver
   ∘ Wi-Fi PPDU
   ∘ Frequency = 60 GHz
   ∘ BW = 20 MHz
   ∘ Periodicity = 10 pkts/s
Gesture Recognition
   ∘ 1 APs and 5 sensing/responding nodes
   ∘ FMCW radar waveform
   ∘ Frequency = 60 GHz
   ∘ BW = 120 MHz
   ∘ Periodicity = 100 pkts/s

As can be seen in the above-mentioned examples, there are one or more features, which enable distinction between the applications. It is noted that the above example is fictional, and that the measurement values may vary. It is noted that these five features (number of transmitters and/or receivers, frame structure / waveform, carrier frequency, bandwidth, and periodicity) are only exemplary here. In general, depending on the desired resolution for the sensing application identification, one or more of these five features and/or any other feature capable of distinguishing (or contributing to the distinction) between sensing applications may be used. In exemplary and non-limiting implementations, the features may be required as mentioned above.

### Identification of sensing signals

Signal characteristics and or sensing applications may be identified based on (blind signal analysis) BSA techniques and/or using predefined tags and/or a set of rules or the like.

Features of a signal out of the existing sensing signals may be identified by machine learning (ML) algorithms.

The ML-based approach may include two stages, which are referred to as training and testing. In the training stage, a dataset may be collected, and the ML model may be configured and trained. Then, in the testing stage, the features of existing sensing signals may be learned. These stages are detailed below.

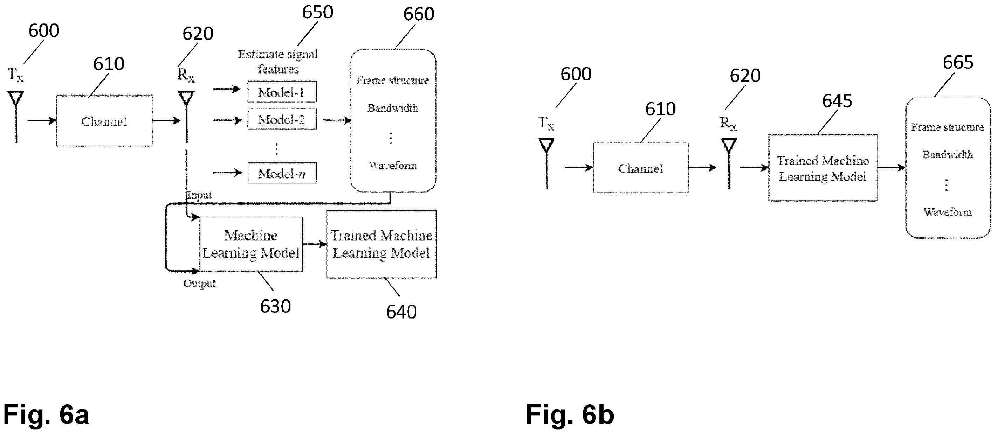

In the training stage, a set of signals may be transmitted by a transmitter 600 via a wireless communication channel 610 and received signals may be captured at the receiver 620. Afterwards, signal features of the received signals, may be estimated by conventional algorithms (models) 650. Then, these estimated features may be stored as outputs in vector format. Correspondingly, the received signals of which these features may be obtained are stored as the input. These processes may be repeated until a sufficient dataset may be generated. The size of the dataset may be determined according to the system requirements, for example, in terms of system performance, complexity, and memory. Then, the ML model 630 may be trained with the created dataset in order to obtain a trained machine learning model 640. These processes are illustrated exemplarily in **Fig. 6a****.** Here note that all hyperparameters of the ML algorithm may be tuned empirically by considering the performance and generalization capability of the algorithm. Once the training and validation loss convergence (using training and validation data) is done in the training stage, the testing stage may start, which characterizes the run-time operation of the algorithm.

In the testing stage, a signal is captured in the receiver 620. Then, this signal is fed to the trained ML algorithm 645. Afterward, the trained ML algorithm estimates the signal features 665. These processes are illustrated exemplarily in **Fig. 6b****.**

It is noted that the transmission over the channel 610 may be simulated. In such simulation, the channel may be represented by a certain mathematical model, or obtained by simulating actual transmission conditions. In these simulations since the features of the transmitted signals are known, there will be no need to estimate features by conventional algorithms in the training stage. The provision of data from the real system, however, may help training the ML model more efficiently for practical use.

For example, instead or in combination with the trained (e.g. ML / DL) module, other kind of methods such as statistical methods or deterministic methods may be employed for the estimation. For example, if it is observed that a signal is repeating periodically, ML or DL methods may not be necessary to detect presence of such sensing signal. It can be determined deterministically whether sensing is taking place or not. In a blind signal analysis (BSA) a received signal may be analyzed regarding its characteristics such as frequency, bandwidth, periodicity or the like. A blind signal analysis may take into account, for example, time domain related features such as received signal strength indication, complementary cumulative distribution function (CCDF), peak to average power ratio (PAPR), duty cycle, frame/burst length. A blind signal analysis may further take into account, for example, frequency domain related features such as bandwidth or carrier frequency. Further characteristics used in a BSA may be cyclostationarity-based features of the signal such as spectral correlation and cyclic features, statistical properties such as autocorrelation function properties, variance, mean, cumulants, and moments (2nd, 3rd, etc.) or multi-carrier parameters of the signal in the time domain (cyclic prefix (CP) duration, symbol duration) and the frequency domain (number of subcarriers, subcarrier spacing). Characteristics used in BSA may further include chip rates, symbol rates, the angle of arrival, a distinction between single-carrier or multi-carrier, a distinction between spread spectrum or narrowband, a hopping sequence or a type of modulation and its order.

Similarly, for sensing application identification, given a predefined set of features and their values for particular applications, identification may be performed. Still further, where sensing applications use specific header information for detecting network types, this or other header information may be detected and used deterministically to determine the identification of an application. There may be the drawback of defining the parameters (features and their values) and application sets for each environment. Thus, depending on the deployment scenario, trained modules may provide better results, for example in more complex scenarios, where deterministic or stochastic distinction is difficult or complex.

Identification or prediction may be made with MAC Layer Protocols or PHY Layer (like with BSA methods), or using some tags (like coding).Identification or prediction may be made in Network Layer or even maybe in upper layers of the Open Systems Interconnection (OSI) model. Also, there may be no need to identify applications. Application identification may not be enough to understand signal characteristics since the environment characteristics may be changed and devices that receive the signal may be different. It may be impossible to have a complete list for all sensing applications. Thus, applications themselves or applications and environments may be grouped/classified based on their similarities, or requirements of the application may be determined by the request of the corresponding wireless system in the setup phase.

### Non-collaborative sensing signal sharing

Previous methods do not use coordination between multiple devices, such as APs to utilize existing sensing signals.

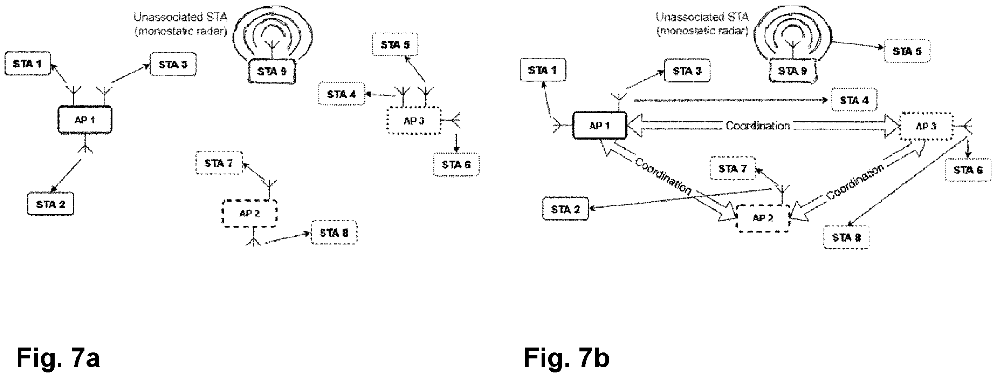

Fig. 7a depicts an exemplary multi-AP scenario with three APs and eight STA which require sensing transmissions without using coordination. Some STAs have same/similar sensing performance requirements, i.e. STA2 and STA7, STA3 and STA4, STA6 and STA8. STA1, STA2 and STA3 are associated with AP1. STA4, STA5, and STA6 are associated with AP2. STA7 and STA8 are associated with AP3. STA9 is a non-associated device performing monostatic radar sensing or is associated to an AP, not in the vicinity of the other APs (AP1, AP2, AP3) and is transmitting sensing transmissions. The antennas with arrows represent distinct sensing transmissions transmitted by the APs for sensing.

In **Fig. 7b****,** more than one AP may be communicating with each other to efficiently use or generate sensing signals. Here, as a result of coordination the APs may transmit fewer sensing transmissions and the transmissions may also be utilized by STAs associated with different APs (APs which do not transmit the sensing transmissions). If the APs may also use identified or predefined sensing applications, they may even improve the performance, as shown by STA5 utilizing the sensing transmission of STA9, which is not associated with one of the APs AP1, AP2, and AP3. Here, AP3 is able to identify the transmissions of STA9 as sensing transmissions and also identify the properties of these transmissions. It then instructs STA5 to utilize these signals. The coordination between wireless devices such as these APs is explained in detail in the following.

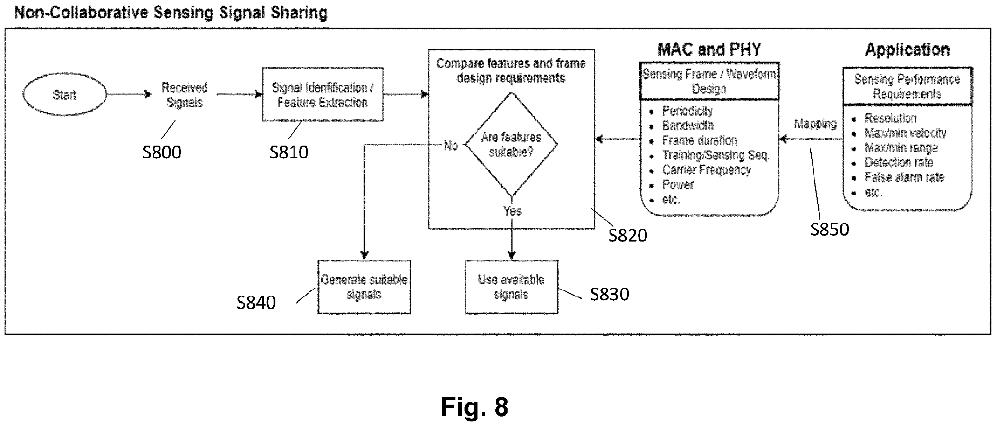

The non-collaborative sensing signal sharing is illustrated exemplarily in **Fig. 8****.** First, signals may be received S800. Then, signal characteristics and or sensing applications may be identified S810 as explained above. Here, a set of rules may be defined in any of the Open Systems Interconnection Model (OSI) layers.

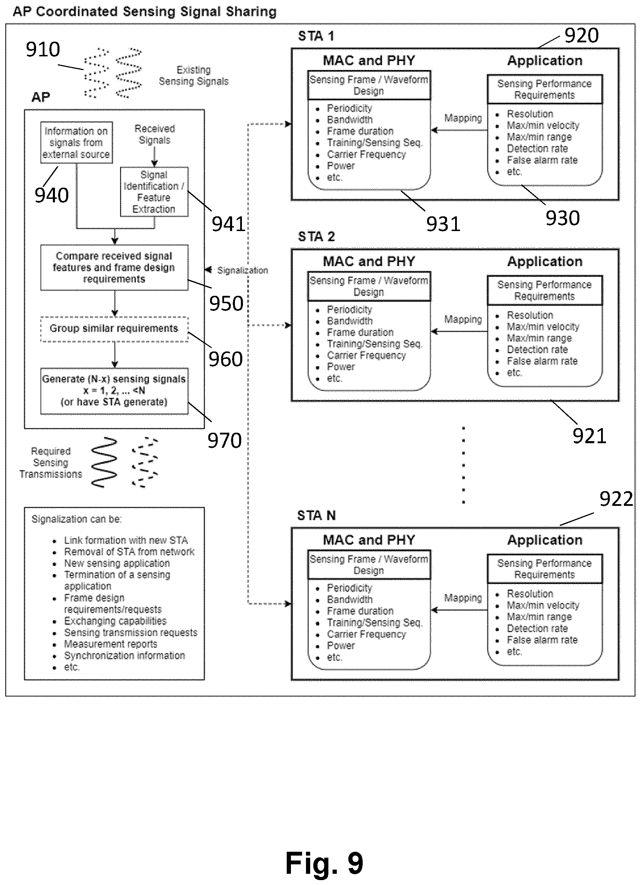

A scheduling of sensing signals for two or more wireless devices 920, 921, 922, which is exemplarily shown in **Fig. 9****,** includes a determination of requirements of sensing performance from the two or more wireless devices. Said requirements of sensing performance may include one or more requirements out of a set of performance requirements. The predetermined requirements may be requirements for sensing frame design and/or waveform design 931, for example, bandwidth, periodicity, frame duration, or the like. The requirements for a sensing application may be mapped S850 to said requirements for sensing frame design and/or waveform design 931. For example, a set of requirements for a sensing application 920 may include resolution, a minimal or a maximal velocity, a minimal or a maximal range for sensing, a detection rate, a false alarm rate, or the like. Each sensing application may require respective minimum performance requirements for a sensing signal to perform its sensing tasks.

A wireless device may be any device such as a base station (eNB, AP) or terminal (UE, STA), or any other entity of the wireless system that is capable of transmitting and/or utilizing sensing transmissions.

The one or more existing sensing signals 910 being transmitted are determined. Such a determination may include receiving information on existing sensing signals from an external source. The determination of sensing signals may include, for example, a signal identification and/or feature extraction S810 as explained above.

One or more groups of wireless devices having similar requirements of sensing performance are determined. Each group comprises one or more of the two or more wireless devices. Similar requirements may be defined by an identical subset of requirements out of a set of performance requirements. Similar requirements may, for example, be defined by a predetermined permissible range and/or a predetermined minimum value and/or a predetermined maximum value for one or more requirements out of the set of requirements. Different set of groups of sensing applications may be defined for different groups of environments.

For each group the features of existing sensing signals are compared with the respective requirements of sensing performance. If the predetermined requirements for a group are fulfilled ("Yes" in S820), the information about existing sensing signals are provided to the group of the one or more wireless devices. In other words, if the received signals meet the minimum requirements of the sensing application, there may not be generated new signals. Instead, the available signals are used S830.

However, note that in the present invention the sensing signal may not be limited to a signal used solely for sensing. Joint communication and sensing signals may also be utilized.

If the predetermined requirements for the group are not fulfilled ("No" in S820), generation of new signals 970 may be initiated S840. A new signal may be generated based on minimum signal requirements of said group.

Initiating generation of new sensing signals may comprise starting to transmit a new sensing signal. A wireless device out of the two or more wireless devices may be instructed to start transmitting a new sensing signal. The instruction may be performed by the device that is scheduling the sensing transmissions.

If the predetermined requirements for the group are not fulfilled (the received signals may not meet the minimum requirements), some of the signal characteristics may be changed by a request to the corresponding transmitter. This process may be made with the consideration of complexity, reliability, and generalizability. In some cases, it may be difficult to adjust signal characteristics, for example, when the wireless devices are mobile or the environment changes rapidly, or some devices may not be capable to adjust the signal because of their power and/or computational complexity requirements. An adjustment of a signal out of the existing sensing signals may be initiated such that the predetermined requirements for the group are fulfilled. In other words, an existing sensing signal is adjusted (reoptimized) in order to serve the requirements for additional sensing applications. More specifically, signals or applications that require maximum signal requirements (among the current ongoing sensing applications of the two or more wireless devices) may be identified, and then based on their respective minimum requirements the signals may be generated. In this way, other applications may also be supported while maintaining the minimum performance requirements of critical/other applications. For example, a new sensing application may require a higher resolution than offered by existing sensing signals. Said higher resolution, which is defined by the minimum requirements of the new sensing application, may be a maximum signal requirement of the present sensing applications. Then an existing sensing signal may be adjusted to provide such a required resolution. Said adjusted signal may still support a sensing application whose minimum requirements are fulfilled by a lover resolution of the sensing signal.

Initiating an adjustment of an existing sensing signal may comprise starting to adjust a sensing signal. Such an adjustment may include one or more of: i) changing parameters of one or more existing sensing signals, ii) generating one or more additional sensing signals or iii) replacing one or more existing sensing signals. One or more wireless devices out of the two or more wireless devices may be instructed to start transmitting a new sensing signal. The wireless device to be instructed may be the wireless device transmitting the sensing signal that is to be adjusted. The instructions may include the minimum performance requirements of the sensing signal to be adjusted and/or generated.

For example, the scheduling may be performed by an AP. If the existing signal to be adjusted is generated by the scheduling AP, the scheduling AP may perform the adjustment of its own signal. If the existing signal to be adjusted is not generated by the scheduling AP or additional signals are required, the scheduling AP may instruct other APs and/or STAs to perform the adjustment on their respective sensing transmissions and/or to perform the generation of additional signals.

Signal features that may be identified in the previous step may be compared with the desired signal of the corresponding sensing application and device property. To decide this, e.g. one or more of periodicity, bandwidth, frame duration, training/sensing sequence, carrier frequency, power, etc. can be considered. Each of the features of a sensing signal may affect one or more of the requirements of a sensing application such as resolution, max/min delay, max/min range, detection rate, false alarm rate, etc. The features of the sensing signal may include, for example, one or more of the following characteristics: frame structure, bandwidth, sensing duration, sensing start time, sensing end time, waveform, periodicity, carrier frequency, power, beam width, beam sweep rate, training sequences and/or pilot placement. However, the present disclosure is not limited to said exemplary features of the sensing signal.

The predetermined requirements may comprise one or more out of the characteristics: frame structure, bandwidth, sensing duration, sensing start time, sensing end time, waveform, periodicity, carrier frequency, power, beam width, beam sweep rate, training sequences and/or pilot placement. Said one or more characteristics may differ for at least two among the predetermined requirements. The mentioned characteristics are explained in detail in the following.
- Frame structure: Depending on the sensing application requirements and the device capabilities, different frame structures may be used for wireless sensing. The sensing transmissions may have a known/same frame structure in some wireless communication standards. This frame structure may be similar to a data transmission frame structure 310, 311, with the exception of having more suitable pilots or training sequences, which will be used for sensing, and may support data transmissions as well, as shown in **Fig. 3****.** The first exemplary frame structure 310, 311 resembles a standardized communication frame structure. For sensing, empty communication frame structures 320, 321 may be used. There may be frame structures 330 solely for sensing purposes or joint sensing and communication frame structures 340. Alternatively, devices that do not comply with wireless communication standards may use various frame designs, which may be distinct from frame designs of data transmissions.
- **Bandwidth:** High bandwidth may needed for better range resolution and fine-grained CSI information, which may be required by specific sensing applications. For example, applications like high-resolution wireless imaging or detecting minute objects and motions require a larger bandwidth. For some wireless sensing processes, the bandwidth may also affect the number and placement of the training/sensing sequence subcarriers. In some applications, different subcarrier frequencies are affected differently by different motions/actions. Therefore, a larger bandwidth can allow more information to be gathered. Conversely, if the sensing method relies on another measurement, like RSS/RSSI, the device may take a measurement at the carrier frequency only and the bandwidth may not have much importance. Intuitively, these sensing applications would use transmissions with smaller bandwidths, e.g. to save power and maybe implementation costs. Thus, the bandwidth occupied by a sensing application may distinguish between sensing applications directed to different object sizes as well as between applications, which do not sense objects at all, or the like. For example, the bandwidth may also affect the maximum velocity and the velocity resolution

- **Sensing duration and start/end times:** It may be unreasonable for Wi-Fi devices to continuously sense the environment if the application does not require it or has ended. For example, a fully immersive video game may only last a couple of hours in a certain time of the day. However, home/room monitoring applications will last 24/7 or until the application is tumed off by the user. Similarly, sleep monitoring applications will only last during the night time. Vital signs monitoring during exercise would only last a few hours and will most likely be scheduled. Therefore, the sensing signal transmission duration and start/end times can also indicate the sensing application.
- **Waveform:** There are various radar waveforms that may be used. The most popular are the pulse radar and frequency modulated continuous wave (FMCW) chirp radar. In pulse radar, the signal is "on" (or being transmitted) during some time of the total frame time, and "off" (not transmitted) the rest of the time. The duration of the signal is "on" or "off" (duty cycle) gives a trade-off between range and range resolution. Longer "on" periods (wider pulse width) provides better range, but poor resolution and vice versa. FMCW chirps are continuous (no off time) and are also able to detect relative velocity (pulsed radars cannot do this without some modifications).
- **Periodicity:** The periodicity corresponds to the transmission rate of the sensing transmission and corresponds to the time resolution of the measurements. Different sensing applications may require different pre-defined or pre-determined periodicities. Generally, applications to detect fast-changing actions/motions/objects require a higher periodicity or packet rate and vice versa.

For example, a lower packet rate in radar may be a factor that increases the maximum range. This may be because, between the packets, the radar listens for reflections. The higher the packet rate, the less time the receiver may have has to listen for reflections in some implementations. Any occurring reflections may be impacted by interference, because of the transmitted signals. Reflections from objects further away may take a longer time to get to the receiver. If at that point another chirp or radar signal is transmitted, it may be difficult to decide whether there is a reflected signal and which transmitted signal the reflected signal belongs to. Moreover, maximum range may be tied to the transmission power.

Similarly, for Wi-Fi sensing applications using CSI or received signal strength (RSS)/received signal strength indicator (RSSI), 100 packets per seconds (pkts/s) is used for gesture recognition and 5-20 pkts/s is used for sleep monitoring (position and breath rate).

For instance, for gesture recognition, from these measurements, patterns for certain kinds of motions can be extracted and used to detect the same motions in new measurements. Alternatively, a learning algorithm can be applied to cluster or classify the measurements to certain groups/actions. The packet rate here may determine the measurement resolution. If the action to be detected is a fast changing one, then higher resolution may be required.

Thus, sensing signals may be sent with a certain rate or periodicity. Depending on the features to be detected and resolution or accuracy, signals can be sent at different rates. Communication signals, on the other hand, are typically more random and do not have any significant periodicity (they may be periodic for 2-3 packets due to the nature of scheduling, but will not be periodic in the long term).
- **Carrier frequency:** Applications for detecting minute changes in location may be better performed with millimeter-waves due to their wavelength. Therefore, sensing may be performed in higher frequencies. However, for large objects or motions, sensing in these frequencies may result in many peaks (or detection). Therefore, sensing for these applications may be done in lower frequency bands, such as 2.4 GHz or 5 GHz. Therefore, this parameter may be important to learn signal characteristics. The frequency may also affect the radar range.
- **Power:** The transmission power may affect the maximum range for sensing.
- **Beamforming parameters: Beam width and beam sweep rate:** In some scenarios, for example, highly cluttered scenarios, omnidirectional transmission of sensing signals may result in too many reflections and multipath, which cannot be processed correctly. In these scenarios, some devices use beamforming, where a signal is transmitted in a narrow beam, to reduce the number of multipath and reflections. In these cases, the beam parameters may need to be adaptively changed. If the beam width is too narrow, the signal may miss the object or may hit it but the resulting measurements would not reflect the true nature of the object. Conversely, if the beam width is too large, it may cause interference to other applications or increase multipath. Similarly, the angle of departure should be able to track the object and the sweep rate should be such that there is sufficient time to receive and process the measurements. For example, the beam width may be affected by the number of antennas. The number of antennas may determine the area being sensed per measurement.

- **Training sequence:** Training sequences used in wireless sensing may affect correlation properties and thus the performance. For instance, a certain type or length of the sequence may be a requirement.
- **Pilot placement:** Pilot placement may be relevant, for example, for CSI based WLAN sensing, where specific packets are transmitted with some periodicity. Pilot placement refers to the position of pilots within the resource grid and may include position (e.g. offset and periodicity if the pilots are periodic) in time domain and/or frequency domain.

One or more of these characteristics may be changed from user to user. Therefore, personal characteristics may be also used to have better system performance. For example, the duration of sensing applications such as home monitoring or sleep monitoring may depend on personal preferences of a user.

The predetermined requirements may include one or more of the above-mentioned requirements. However, note that the present invention is not limited to those exemplary characteristics.

A first wireless device out of the two or more wireless devices may be associated with a first network and a second wireless device out of the two or more wireless devices may be associated with a second wireless network.

The first and second network may a same network, e.g. a network including multiple APs (like in an enterprise network) where each AP coordinates its own devices but they belong to the same overall network.

The first and the second network may be of the same type, e.g. WLAN networks or cellular networks, or the like. The two networks of the same type may operate independently from each other.

The first and the second network may be two different types of networks. For example, the first network may be a WLAN network and the second network may be a cellular network.

However, note that the present invention is not limited to these exemplary networks. For instance, the amendment IEEE 802.11bf - Wireless Local Area Network (WLAN) Sensing - may include support for wireless sensing in WLAN networks. The fifth-generation (5G) New Radio (NR) standard,6G standards or other future standards may also apply wireless sensing as its part of future cellular communications networks. The present disclosure is also applicable to other communication technologies such as 3G or communication technologies under long-term evolution (LTE)/LTE Unlicensed (LTE-U). The present invention may be applied to any future type of a wireless network that may support wireless sensing.

Any signals that can support the required features of the sensing application may be used. For this purpose, first, existing sensing applications/signals may be identified. The features of a signal out of the existing sensing signals may be identified using one or more of the following techniques.

A sensing signal may be identified by an identification information that is provided by the wireless device generating the signal. For example, a predefined tag may be provided by the generating wireless device. Said information or tag may be mapped to a set of signal characteristics by the receiving device. Such a predefined mapping may, for example, be set by a standard or be configured by a control protocol of a device as an access point or a station or the like.

If the sensing signals are generated by the wireless devices that may share the information about existing sensing signals with each other, said identification information may be provided directly to other wireless devices.

The identification information may be provided by the generating wireless device on request and/or the identification information may be added to the sensing signal.

The features of an existing sensing signal may be determined by a blind signal analysis as explained above.

The features of an existing sensing signal may be determined by machine learning techniques as explained above with reference to Figs. 6a and 6b.

Wireless devices may not need to identify and predict the existing signals. Signal type information may be available in future wireless systems, for example in future WLAN standards.

The information about a sensing application of a wireless device out of the two or more wireless devices may be stored in a first database. For example, the first database may be the sensing application registry (SAR), which is explained in detail in the section *"Multi-AP sensing signal sharing framework".* The sensing capabilities of the two or more wireless devices may be stored in a second database. For example, the second data base may be a device sensing capability registry (DSCR), which is explained in detail in the section *"Multi-AP sensing signal sharing framework"* below.

The entries of the first database may be transmitted to a wireless device out of the two or more wireless devices. The entries of the second database may be transmitted to a wireless device out of the two or more wireless devices. For example, the sharing of database entries with other wireless devices may be performed by a sensing transmission control (STC) unit 1201, which is explained in detail in the section *"Multi-AP sensing signal sharing framework".*

If a wireless device is mobile, periodic control of the best resource allocation may be made.

In the future standards, sensing applications may be categorized into small groups based on their requirements similar to the communication services in 5G (eMBB (enhanced Mobile Broadband), URLLC (Ultra-Reliable Low Latency Communications), mMTC (massive Machine Type Communications)). In this case, sensing signals may be utilized based on the sensing application (and their requirements) categories.

This present disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the embodiments of the present disclosure can be used in JSC technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, phones, computers, WLAN and WiFi devices, etc. Other devices could be stand-alone wireless sensors, such as heart-rate monitors, motion detectors, smart watches, etc. Besides these applications, the invention can be used for military services such as enemy sensors, the existence of enemy devices and what they are sensing can be learned and some precaution can be taken. This disclosure can especially be used in network controllers and managing devices, such as APs, BSs, edge nodes, enhanced nodes, etc. for technologies such as CR, reconfigurable radio systems, etc.

In some embodiments, the sensing signal is a continuous or periodic radar signal. In some embodiments, the sensing signal is a signal generated by a sensing application supporting wireless sensing, wireless local area sensing, and/or non-invasive medical sensing.

In general, wireless sensing is performed by measuring some features of a received signal. On the other hand, communication is performed by detecting from the received signal information encoded therein at the transmitter. In communication, some features of the received signal are used to perform the detection (such as demodulation and decoding).

There are numerous frame designs, waveforms, and transmission schemes that are being used for wireless sensing and JSC. Their use depends on the method of wireless sensing that is being used. For example, wireless sensing may be done in one of the following ways:
- **Wireless fingerprinting:** Measurements are taken, either at different locations or with a stationary sensor, while different actions are taking place. These measurements may be processed and stored beforehand in a look-up table with their respective locations/actions.
- **Radar-based sensing:** Sensing signals are transmitted with a certain rate and duty cycle and the reflections of these signals are processed to learn information about the object, such as its range, size, relative velocity, material, etc. In radar applications, waveforms or frame designs with high auto-correlation properties and low peak to average power ratio (PAPR), due to high transmit powers and very low receive powers) are preferred. Common waveforms are pulse waveforms or frequency modulated continuous wave waveforms. Frame design and transmission mechanism-based factors which may affect radar performance are the transmit power, duty cycle, pulse repetition frequency, frequency modulation, carrier frequency, auto-correlation properties, bandwidth, signal period, angle of departure, beamwidth, beam sweep rate, or the like. Environment factors which may affect radar performance are the amount of clutter, physical properties of the object (size, material, etc.), location of the object, atmospheric conditions (e.g.: humidity), or the like. Spectrum conditions which may affect the radar performance are the occupancy, number of users, interference, channel conditions (time/frequency selective), or the like.
- **Pattern-based sensing:** This is similar to wireless fingerprinting, except that the measurements are not pre-stored in a look-up table, but rather a pattern is extracted from them, which represents the action/object to be detected, and the pattern is used to detect the action/object in future measurements. Example frame designs and waveforms are the physical protocol data unit (PPDU) packet in Wi-Fi and OFDM and orthogonal time frequency space (OTFS) waveforms. Frame design and transmission mechanism-related factors which may affect the performance of sensing are the sensing/training/pilot sequence, placement of these sequences (in which subcarriers), bandwidth, carrier frequency, packet length, packet repetition frequency, angle of departure, beamwidth, beam sweep rate, RF impairments, or the like. Environment-related factors which may affect the sensing performance are a number of mobile objects in the area (environment stationarity), a number of users/objects to be detected, nature of the motion/action/activity to be detected (large/small displacement, slow/fast-moving or the like), atmospheric conditions, physical properties of the object/user to be detected, or the like. Spectrum conditions which may affect the radar performance are the occupancy, number of users, interference, channel conditions (time/frequency selective), or the like.

In general, the present disclosure is not limited to the above-mentioned three types of sensing.

The features of the received signal measured by the wireless sensing may include, but are not limited to, time-of-flight, RSSI, CSI, or the like. Transmitted signal parameters affecting the performance of the wireless sensing are, but not limited to, the transmitted frequency, bandwidth, waveform, power, training or sensing sequence, auto-correlation capabilities, pilots, beam angle and width (if beamforming is taking place), duty cycle, transmission rate, or the like.

It is desired that wireless sensing, communication, and JSC devices operate/coexist peacefully in the same (or at least partially overlapping) frequency bands with a maximum efficiency, in terms of spectrum usage, power, or the like., and sensing and communication performance, in terms of throughput, reliability, sensing accuracy, or the like. This may be facilitated by detecting and/or identifying the sensing signals as described herein.

### Multi-AP sensing signal sharing framework

In an exemplary scenario the transmissions are scheduled by an AP. The scheduling may performed by the sensing transmission control architecture 1200 including a sensing transmission control unit 1201. However, note that that the present invention is not limited to this exemplary implementation. The STC architecture may be included, for example in a STA, a base station, a terminal or any other wireless device.

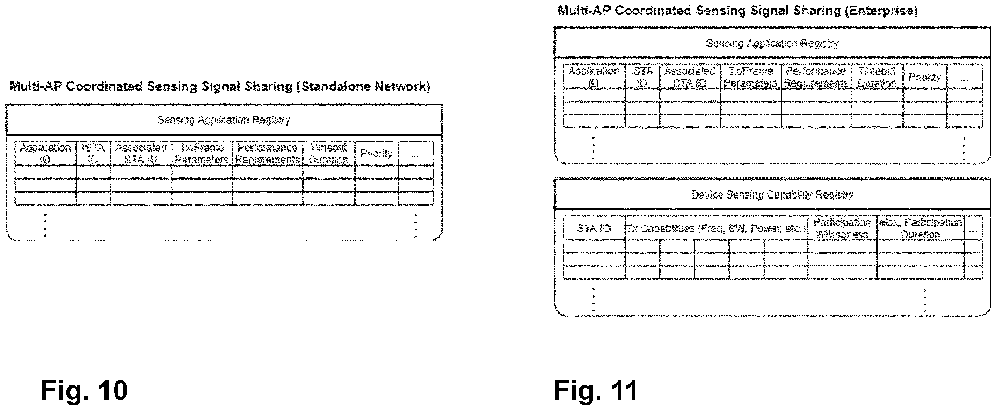

The coordination between APs may be initiated by sharing the Sensing Application Registry (SAR), which contains information on the sensing applications occurring in the network controlled by the AP. An exemplary illustration of the SAR in a standalone network during multi-AP coordination for sensing signal sharing is given in **Fig. 10****.** The shared information may be the Application ID, the initiating station (ISTA) ID, Associated STA IDs, Sensing Signal Parameters, Performance Requirements, Timeout Duration, Priority, etc. For enterprise networks, more information may be shared, such as the Device Sensing Capability Registry (DSCR). An exemplary illustration of the SAR and the DSCR in enterprise networks during multi-AP coordination for sensing signal sharing is given in **Fig. 11****.** The information shared in enterprise networks may be the STA ID, Sensing Capabilities, Transmission Capabilities, Willingness to Participate in Sensing Sessions, Max. Participation Duration, etc.

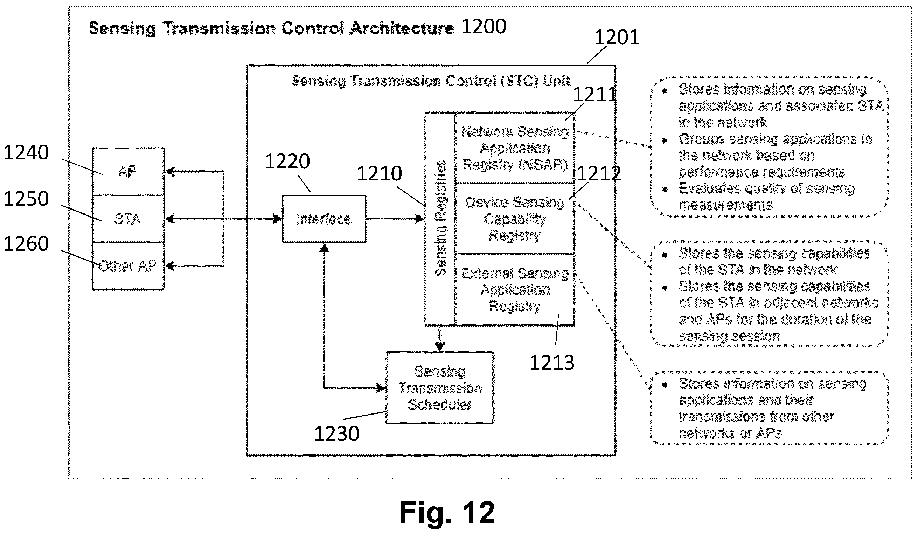

An exemplary architecture for the sensing transmission control and optimization between multiple APs or STAs is given in **Fig. 12****.** Here, the storage of the necessary information and the coordination of sensing transmissions (and sharing these transmissions between APs and applications) may be managed by the Sensing Transmission Control (STC) Unit.

In the following, the SAR, DSCR and STC are explained in detail.

The Sensing Application Registry (SAR) is a database containing information on the sensing applications/sessions in the environment. It may be further divided into Network SAR (N-SAR), which contains the sensing applications/sessions in the devices' own network, and External SAR (E-SAR), which contains information on sensing applications/sessions taking place in other/neighboring networks.

The SAR database may contain the Application ID, which is unique for each sensing session and may be used to identify the sensing session and associated information. It may also contain some sequence which may be used to determine the type of sensing application.

The SAR may further contain an Associated Station (ASTA). These devices may not be involved in the sensing session initiated by a particular ISTA, but may utilize the transmissions of the sensing session opportunistically for their own sensing application. An ASTA may also be indirectly involved in the sensing parameter optimization by providing their own sensing parameter requirements.

The SAR may further contain Tx/Frame Parameters. These parameters may indicate the frame design parameters used for the sensing signal transmissions in the sensing session. Examples may be bandwidth, training sequence, security measures, power, waveform, or the like.

The SAR may further contain Performance Requirements, which may indicate the performance requirements of the sensing session. The values may be specific to certain dimensions, such as range and velocity, or may be the overall detection accuracy. An exemplary entry may be <0.1m@90%, which indicates an error of less than 10cm for 90% of the results.

The SAR may further contain a Timeout Duration, which may indicate the duration of the sensing session.

The SAR may further contain a Priority. This may indicate the priority level of the sensing application. The priority level may be over other sensing applications or over other wireless transmissions in general. For example, a home security oriented sensing application may have priority over gaming oriented sensing applications and therefore, when allocating radio resources or optimizing sensing signals for joint sensing, the requirements of the home security oriented sensing application may be prioritized. For example, health critical sensing applications may have priority over even communication transmissions.

Sometimes, sensing may be more important than communication. For example, at night time there will be no communication but people's breath rate may be detected. In that case, priority may be given to breath rate surveillance based on coordination between wireless devices. On the other hand, sometimes, communication may be more critical. At that time, priority may be given to communication. Sometimes joint communication and sensing may be made with the same priority.

The Device Sensing Capability Registry (DSCR) is a database on the sensing capabilities of all devices in the network (e.g. all STAs linked to the AP controlling the network). The information contained in this database may be the transmission capabilities of the devices (Tx freq, BW, MIMO, beam related parameters or the like), their willingness to participate in others' sensing sessions (as RSTA), their maximum participation duration, how much power they may allocate to others' sensing sessions, or the like.

The Sensing Transmission Control (STC) Architecture may include components for controlling, coordinating, and optimizing the sensing parameters related to the transmission of sensing signals. The STC Architecture includes, for example, Sensing Registries (SR), which may include the E-SAR, N-SAR and DSCR databases.

Further an STC Architecture may include a Sensing Transmission Scheduler (STS). In an exemplary implementation a STS may be realized as processor. The STS may be tasked with optimizing and scheduling the sensing signals. Further tasks like negotiating the sensing session parameters based on the sensing application requirements or sensing activities in the environments, available resources and available devices may be performed by the STS.

Further an STC Architecture may include an Interface. The interface may collect and direct the communication between other components of the STC and external devices, such as, for example, the AP, a neighboring AP, and/or STAs.

### Multi-AP sensing signal sharing scenarios

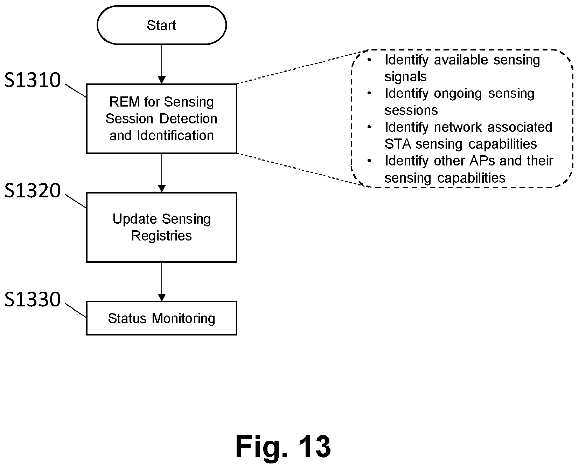

Exemplary coordination processes in the Multi-AP (or device) framework to utilize Wi-Fi signals efficiently for Wi-Fi sensing is described in the following with reference to Figs. 13 to 18. Note that some of the exemplary scenarios use two APs for the sake of simplicity. However the present disclosure is not limited to two APs and the number of APs may be increased. Additionally, it is assumed that the devices transmitting sensing signals may be APs. However, any wireless device that is capable of transmitting a sensing signal may be used. In this exemplary framework, Radio Environment Monitoring (REM) is used as a means of observing the spectrum and signals in the environment.

As exemplarily shown in **Fig. 13****,** each of the exemplary scenarios may utilize REM S1310 to identify, for example, available sensing signals, ongoing sensing sessions, network associated STA sensing capabilities and/or other APs and their sensing capabilities. The sensing registries may be updated S1320 according to the obtained information of the identification. Some possible scenarios that may occur during status monitoring S1330 are explained in the following.

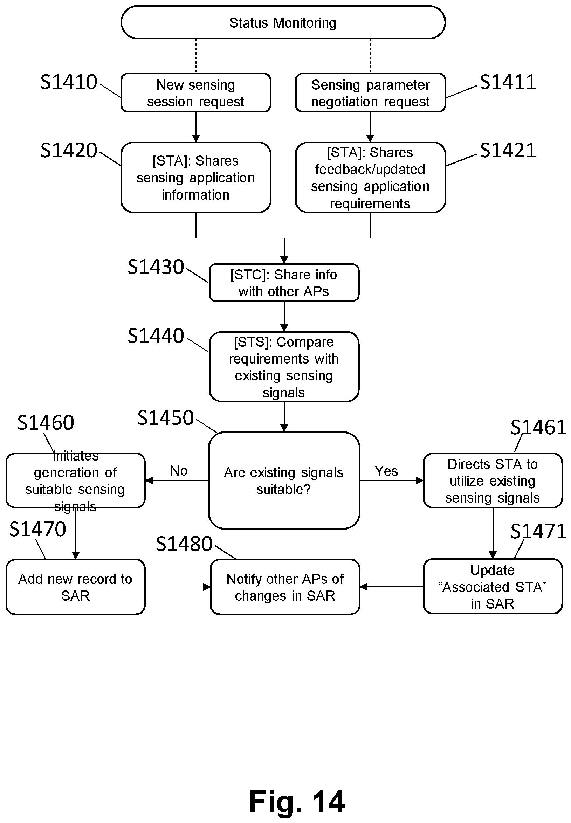

An exemplary case during status monitoring is described with reference to **Fig. 14****.** In this exemplary case a detected request may request a new sensing session S1410. The wireless device (STA in this example) that transmits the request, shares information about the sensing application S1420. The detected request may be a request for sensing parameter negotiation S1411. The wireless device, e.g. a STA, may share feedback and/or updated sensing application requirements S1421.

In both cases the STC may share the received information with other APs S1430. The STS may compare the requirements with existing sensing signals S 1440. If the existing sensing signals are suitable ("Yes" in S1461) the STA may be directed to utilize the existing sensing signals S1461. The entry "Associated STA" in the SAR database may be updated S1471. In the following, other APs may be notified of changes in the SAR S1480. If the existing signals are not suitable ("No" in S 1450), generation of suitable sensing signals may be initiated S1460. In order to obtain a suitable sensing signal, the scheduling device may initiate the generation of a new sensing signal or initiate the adaption of an existing sensing signal as explained above. A record of the new or adapted sensing signal may be added to the SAR S1470. In the following, other APs may be notified of changes in the SAR S1480.

In such cases, before changing the parameters of the sensing session of the primary application, coordination between the STAs may be done to prevent a drop in performance of the other sensing sessions. The same may apply for an exemplary scenario where the requirements or priority of the primary sensing application increases.

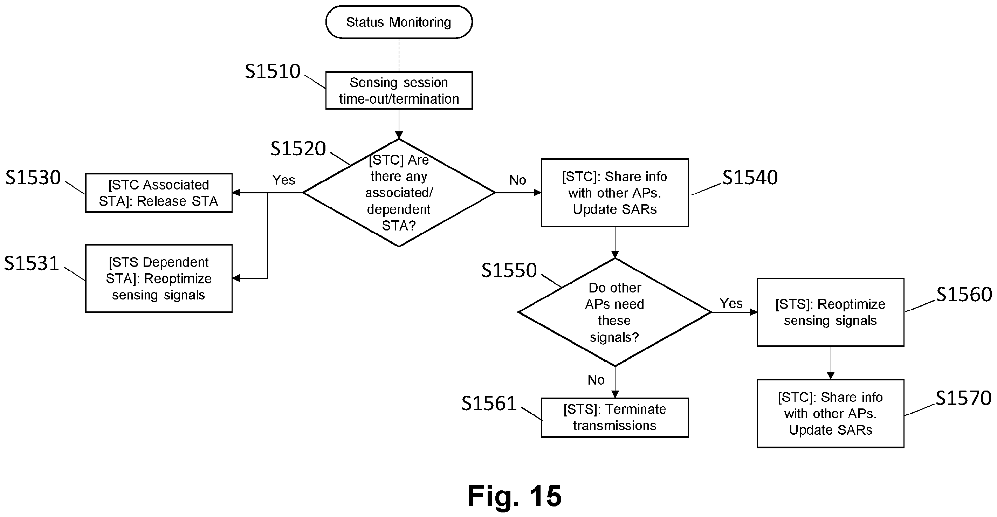

A sensing session may time-out or terminate during status monitoring S1510. Such a process is exemplarily described with reference to **Fig. 15****.** In the case of a time-out or termination, the STC may determine whether there are any associated or dependent STAs S1520, which may utilize the same sensing signal as the timed-out or terminated sensing session. If there is an associated STA ("Yes" in S1520), the STA may be released S1530. For example, if the associated STA performed measurements for the terminated sensing session based on received sensing signals, said measurements may be stopped. If there is a dependent STA ("Yes" in S1520), the sensing signals may be adjusted (reoptimized) S1531. A dependent STA may use sensing signals of another sensing application having similar requirements. If there is no associated/dependent STA ("No" in S1520), the STC may share the information with other APs S1540. The SARs may be updated. If it is determined that other APs may not need the signals used by the terminated sensing session ("No" in S1550), the STS may terminate the transmission of the sensing signal of the timed-out or terminated session S1561. If it is determined that other APs may need the signals used by the terminated sensing session ("Yes" in S1550), the STS may adjust (reoptimize) the parameters of these signals to better serve the remaining sensing applications/sessions S1560. The STC may share the information about the adjustment with the other APs and the SARs may be updated S1570.

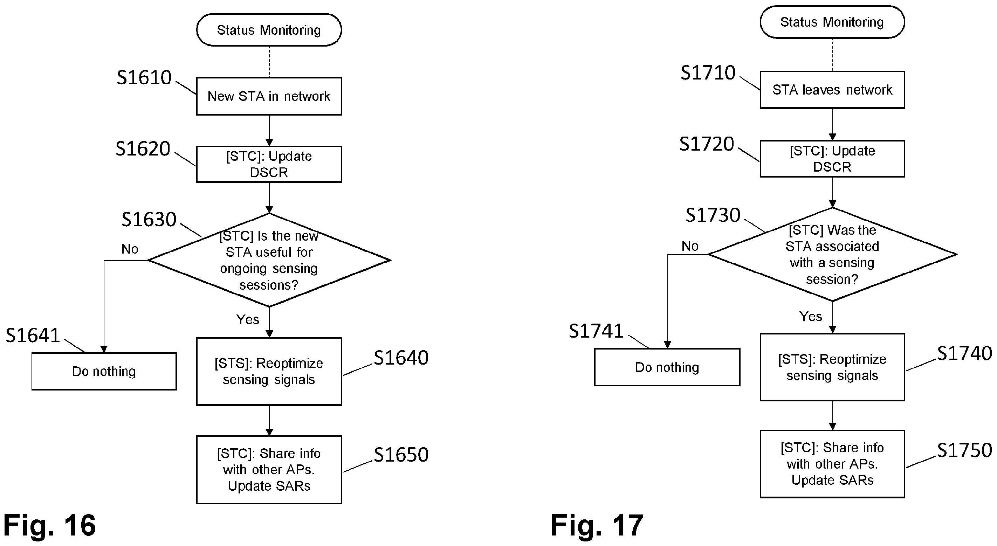

During status monitoring a new station may enter the network S1610. Such a process is exemplarily described with reference to **Fig. 16****.**The STC may update the DSCR database S1620 to include the sensing capabilities of the new STA. If the SCT determines that the new STA may not be useful for ongoing sensing sessions ("No" in S1630), the STC does not take any further action S1641. If the SCT determines that the new STA may be useful for ongoing sensing sessions ("Yes" in S1630), the STS may adjust (reoptimize) existing sensing signals S1640. For example, the new STA may be more capable and may be able to transmit more suitable sensing signals for the ongoing applications. For example, the new STA may aid sensing applications by making measurements, as in a collaborative sensing scenario where multiple STA volunteer as associated stations to take measurements for a single sensing application to improve quality and coverage area. In this case, the sensing capabilities and transmission capabilities may be shared among the APs to improve sensing performance. The STC may share the information with other APs and update the SAR database S1650.

When there is a new sensing session request the resource allocation strategy may be changed. There may already be existing signals transmitted by an AP with similar requirements as what is desired by the new application. Thus, the existing signals may be adjusted (reoptimized) to optimally cater to both the new application and the existing ones.

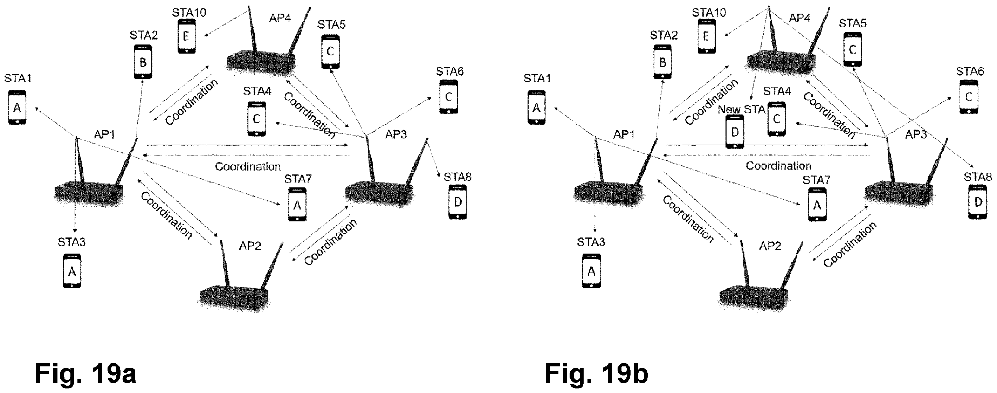

A new STA entering an environment of coordinating APs is exemplarily shown in Figs. 19a and 19b. In Fig. 19a, AP1, AP2, AP3 and AP4 are coordinating their sensing transmissions. Some of the associated stations may have similar requirements for sensing performance which are grouped into five groups A, B, C, D and E in this example. STA1, STA3 and STA7 are having similar requirements A and are associated with AP1. Further, STA2 having different requirements B is associated with AP1. STA4, STA5 and STA6 are having similar requirements C for sensing and are associated with AP3. Further, STA8, which has requirements D, is associated with AP3. STA 10, which has requirements E, is associated with AP4.

In Fig. 19b a new STA enters the environment and is associated with AP4. Due to the sharing of information, it is determined, that STA8 and the new STA have similar requirements D. Thus, STA 8 may be associated with AP4, which provides the sensing signals for the requirements of group D.

A station may leave the network S1710 during status monitoring. Such a process is exemplarily described with reference to **Fig. 17****.** The STC may update the DSCR database S1720. If the SCT determines that the STA may not have been associated with a sensing sessions ("No" in S1730), the STC does not take any further action S1741. If the SCT determines that the station may have been associated with a sensing sessions ("Yes" in S1730), the STS may adjust (reoptimize) sensing signals S1740. For example, when a sensing session is terminated and there were sensing signals being transmitted for that session, the ceasing of these signals may affect other applications/sessions belonging to other APs/networks. Therefore, AP coordination may ensure that there is a smooth transition. If said session was utilizing existing signals, the parameters of these signals may be adjusted (reoptimized) to better serve the remaining sensing applications/sessions. For example, when a STA leaves the network, the sensing sessions associated to or dependent on said STA, either for sensing signal transmission or measurements, may be adjusted (reoptimized) and the sensing session parameters may be renegotiated. The STC may share the information with other APs and update the SAR database S1750.

If multiple STAs leave the environment or multiple sensing sessions are terminated, the resource allocation and signal generation strategies may be changed as described above for one station.

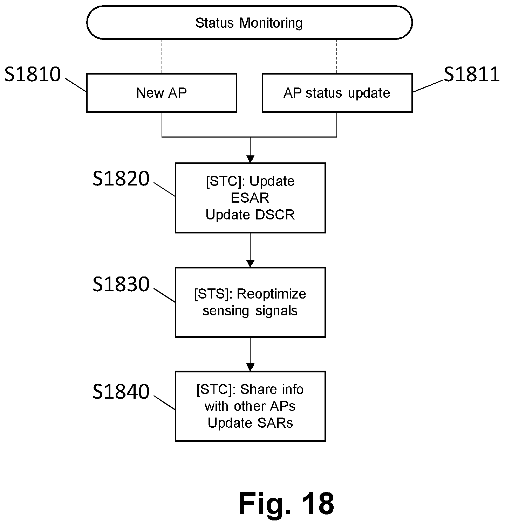

A new AP may enter the environment S1810 as it is exemplarily described in **Fig. 18****.** In this case, resource allocation may be changed. For example, there may be two of the same sensing applications handled by two different APs (because of distance between AP/STA or channel quality). A new AP entering may, for example, be able to support the devices for both the sensing applications simultaneously. Therefore, one signal may be used to support two different sensing applications/sessions.

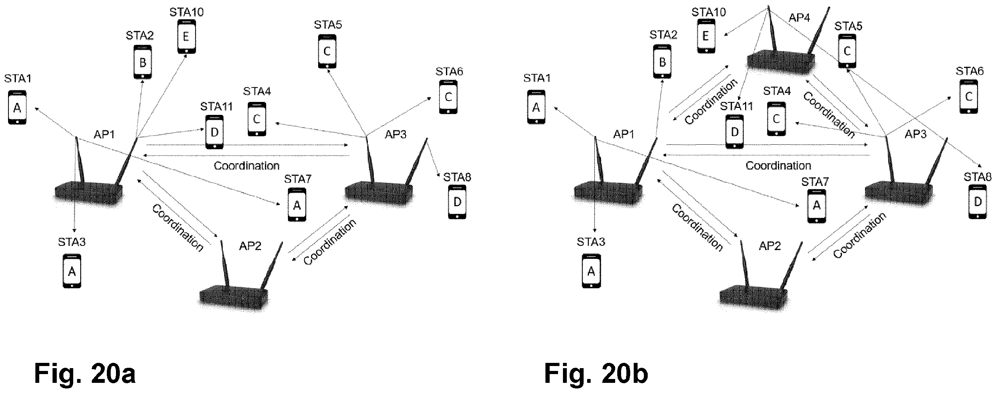

**Fig. 20a** shows a simple multi-AP scenario where the sensing sessions of STA 8 and STA 11 are being supported by two different APs. This may be the case because AP1 and STA8 and also AP3 and STA11 are far from each other. A new AP entering the environment in **Fig. 20b** may support the sensing application of STA 8 and STA 11 by itself.

In Fig. 20a, AP1, AP2 and AP3 are coordinating their sensing transmissions. Some of the associated stations may have similar requirements for sensing performance which are grouped into five groups A, B, C, D and E in this example. STA1, STA3 and STA7 are having similar requirements A and are associated with AP1. Further, STA2, STA10 and STA 11, which having different requirements B, E and D, respectively, are supported by AP1. STA4, STA5 and STA6 are having similar requirements C for sensing and are associated with AP3. Further, STA8, which has requirements D, is supported by AP3.

In Fig. 20b, AP4 enters the environment and is associated with AP4. AP4 may support the sensing applications of STA8 and STA11, which require similar sensing performance D. In addition, AP4 may take over STA10, which has been supported by AP1 before. Thus, less sensing signals may be transmitted.

APs may turn off due to many reasons - power requirements, power cuts, hardware damage/issues, or the like. Additionally, in future wireless communication systems APs may be mobile and may physically leave the environment. In such cases, before an AP loses its connectivity, it may share its workload with other APs due to the existing coordination between multiple APs and de-associate any STA from other APs in its sensing sessions.

If a new AP enters the environment S1810 or an AP updates its status S1811, the STC may update the ESAR and DSCR databases S1820. The STS may adjust (reoptimize) sensing signals S1830. The STC may share the information with other APs and update the SAR database S1840.

Multiple STAs with multiple distinct sensing session requests may enter the environment simultaneously. When the number of applications or requirements is decreasing in an exemplary scenario, the characteristic of the signal that will be generated may be change. In this exemplary case, first the APs may check whether existing signals from sensing sessions in the network or sensing sessions in other networks (with other APs) may support the sensing requirements of these STAs. This may be done by checking the SARs. If existing signals may support the applications, then there is no need to generate a new signal. If existing signals cannot support these new STAs, it may be determined whether an adjustment of the existing sensing session parameters may support the requested applications. If this is not possible, then the multiple APs may coordinate to decide on the sensing session parameters which may serve all or a maximum number of applications.

The present invention is not limited to the described exemplary scenarios. An environment in which signal sharing is performed may include one or more wireless devices. A wireless device may be an AP or a STA or the like. In the above described exemplary scenarios, the sensing signals are transmitted by APs. However, the present invention is not limited to this. Currently, STAs are not powerful devices. Most of them have power and complexity constraints. In the future, STAs may be more powerful. For example, a fridge, television, or the like may be used as STA. In that case, a coordination of APs as described in the exemplary scenarios may also be performed by STAs.

In an example, two different sensing applications/sessions may be active and these applications/sessions may be initially unaware of each other. After a certain period of time, the applications may become aware of each other. If there is no coordination between these sessions, both applications may stop transmitting the sensing signals they need at the same time (because both applications assume that they have found a sensing signal they can opportunistically use, i.e. the others' signal). Coordination is required to prevent such a thing. In this scenario, one signal may be stopped and the other may continue to be transmitted or one may be stopped and the values of the other may be optimized to support both applications simultaneously. Or the parameters of both may be separately optimized and the signals may be used for other sensing applications/sessions as well.

### Implementations in software and hardware

It is noted that although embodiments and examples of the present disclosure were provided in terms of a method above, the corresponding device providing the functionality described by the methods are also provided. For example, a device is provided for scheduling sensing signals. The device may comprise a processing circuitry which is configured to perform step according to any of the above mentioned methods. The device may further comprise a transceiver for performing wireless reception, transmission or sensing. Alternatively to the transceiver, the processing circuitry may control an external transceiver to perform wireless reception, transmission or sensing.

The wireless device for scheduling of sensing signals may further comprise a memory, which stores information about a sensing application of a wireless device out of the two or more wireless devices in a first database and/or stores sensing capabilities of the two or more wireless devices in a second database.

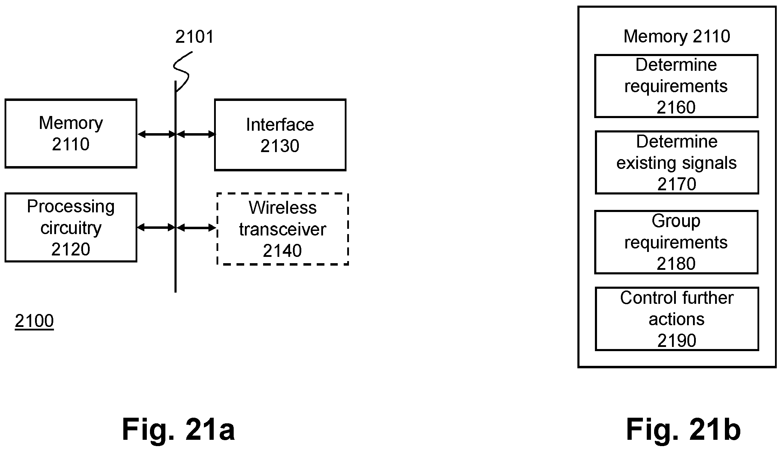

**Fig. 21a** shows an exemplary device 2100, which may implement some embodiments of the present disclosure. For example, the device may be the device for scheduling sensing signals. Such a device may include memory 2110, processing circuitry 2120, a wireless transceiver 2140, and possibly a user interface 2130. The device may be, for instance a (part of) a base station or a terminal/STA, or another device as mentioned above.

The memory 2110 may store the program, which may be executed by the processing circuitry 2120 to perform steps of any of the above-mentioned methods. The processing circuitry may comprise one or more processors and/or other dedicated or programmable hardware. The wireless transceiver 2140 may be configured to receive and/or transmit wireless signals. The transceiver 2140 may include also baseband processing which may detect, decode and interpret the data according to some standard or predefined convention. However, this is not necessary and devices with only sensing applications may implement only the lower one or two protocol layers. For example, the transceiver may be used to perform measurement, communicate with other devices such as base stations and/or terminals. The device 2100 may further include a user interface 2130 for displaying messages or status of the device, or the like and/or for receiving a user's input. A bus 2101 interconnects the memory, the processing circuitry, the wireless transceiver, and the user interface.

**Fig. 21b** shows an example of the memory 2110, including a module 2160 for determine requirements, a module 2170 for determining existing signals, a module 2180 for grouping requirements, and a module 2180 for controlling the transceiver 2140 to adapt the wireless reception, transmission or sensing. These modules 2160-2190 may be fetched from the memory and executed by the processing circuitry 2120.

The above examples are not to limit the present disclosure. There are many modifications and configurations which may be used in addition or alternatively, as will be briefly described below.

Similarly, a device is provided for training a module for identifying a sensing application, the device comprising a processing circuitry configured to: input to the module: a representation of a received wireless signal and one of or both a desired indication of presence or absence of a sensing signal in the representation and a desired indication of a sensing application generating the sensing signal; and modify at least one parameter of the module in accordance with the input.

This present disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the embodiments of the present disclosure can be used in JSC technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, WLAN and WiFi devices, etc. Other devices could be stand-alone wireless sensors, such as heart-rate monitors, motion detectors, smart watches, etc. Besides these applications, the invention can be used for military services such as enemy sensors, the existence of enemy devices and what they are sensing can be learned and some precaution can be taken. This disclosure can especially be used in network controllers and managing devices, such as APs, BSs, edge nodes, enhanced nodes, etc. for technologies such as CR, reconfigurable radio systems, etc.

The methodologies described herein may be implemented by various means depending upon the application. For example, these methodologies may be implemented in hardware, operation system, firmware, software, or any combination of two or all of them. For a hardware implementation, any processing circuitry 2120 may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium such as the memory 2110 or any other type of storage. The computer-readable media includes physical computer storage media, which may be any available medium that can be accessed by the computer, or, in general by the processing circuitry 2120. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, some embodiments in the present disclosure relate to scheduling sensing signals for two or more wireless devices. Requirements of sensing applications of the wireless devices are determined. Existing sensing signals are received and the characteristics of the existing sensing signals may be determined. The wireless devices having similar requirements are grouped. Each group is provided with information about existing sensing signals if the predetermined requirements for the group are fulfilled in a comparison with features of the existing sensing signals.

According to an embodiment, a method is provided for scheduling sensing signals for two or more wireless devices , comprising: determining requirements of sensing performance from the two or more wireless devices; determining existing sensing signals being transmitted by the two or more wireless devices; determining one or more groups of wireless devices having similar requirements of sensing performance, each group comprising one or more wireless devices of the two or more wireless devices; for each group, comparing features of existing sensing signals with respective requirements of sensing performance; providing information about the existing sensing signals to a group out of the one or more groups of wireless devices, if the predetermined requirements for the group are fulfilled.

In an exemplary implementation, the method is further comprising, if the predetermined requirements for the group are not fulfilled, initiating generation of a new sensing signal.

For example, initiating generation of a new sensing signal comprises at least one of starting to transmit a new sensing signal, or instructing a wireless device out of the two or more wireless devices to start transmitting a new sensing signal.

In an exemplary implementation, the method is further comprising, if the predetermined requirements for the group are not fulfilled, initiating an adjustment of a signal out of the existing sensing signals such that the predetermined requirements for the group are fulfilled.

For example, initiating an adjustment of the signal out of the existing sensing signals comprises at least one of starting to adjust the signal, or instructing a wireless device out of the two or more wireless devices to start adjusting the signal.

In an exemplary implementation, the predetermined requirements comprise on one or more out of the characteristics: frame structure, bandwidth, sensing duration, sensing start time, sensing end time, waveform, periodicity, carrier frequency, power, beam width, beam sweep rate, training sequences, pilot placement; and said one or more characteristics differ for at least two among the predetermined requirements.

For example, a first wireless device out of the two or more wireless devices is associated with a first wireless network and a second wireless device out of the two or more wireless devices is associated with a second wireless network, wherein the first wireless network and the second wireless network are either a same wireless network or different wireless networks.

In an exemplary implementation, features of a signal out of the existing sensing signals are identified using one or more of an identification information that is provided by a wireless device out of the two or more wireless devices, the wireless device generating the signal, blind signal analysis (BSA), machine learning techniques.

For example, the method is further comprising storing information about a sensing application of a wireless device out of the two or more wireless devices in a first database and/or storing sensing capabilities of the two or more wireless devices in a second database.

In an exemplary implementation, the method is further comprising transmitting entries of the first database to a wireless device out of the two or more wireless devices and/or transmitting entries of the second database to a wireless device out of the two or more wireless devices. In an exemplary implementation, a computer program stored in a non-transitory, computer-readable medium, the program comprising code instructions which, when executed on one or more processors, cause the one or more processors to perform steps of any of the methods described above.

According to an embodiment, a wireless device is provided for scheduling sensing signals, comprising: processing circuitry configured to determine requirements of sensing performance from two or more wireless devices; determine existing sensing signals being transmitted; determine one or more groups of wireless devices having similar requirements of sensing performance, each group comprising one or more wireless devices of the two or more wireless devices; for each group, compare features of existing sensing signals with respective requirements of sensing performance; a transceiver configured to transmit information about the existing sensing signals to a group out of the one or more groups of wireless devices, if the predetermined requirements for the group are fulfilled.

In an exemplary implementation, the processing circuitry is further configured to, if the predetermined requirements for the group are not fulfilled, initiate generation of a new sensing signal.

For example, initiating generation of a new sensing signal comprises at least one of starting to transmit a new sensing signal, or instructing a wireless device out of the two or more wireless devices to start transmitting a new sensing signal.

In an exemplary implementation, the processing circuitry is further configured to, if the predetermined requirements for the group are not fulfilled, initiate an adjustment of a signal out of the existing sensing signals such that the predetermined requirements for the group are fulfilled.

For example, initiating an adjustment of the signal out of the existing sensing signals comprises at least one of starting to adjust the signal, or instructing a wireless device out of the two or more wireless devices to start adjusting the signal.

In an exemplary implementation, the predetermined requirements comprise on one or more out of the characteristics: frame structure, bandwidth, sensing duration, sensing start time, sensing end time, waveform, periodicity, carrier frequency, power, beam width, beam sweep rate, training sequences, pilot placement; and said one or more characteristics differ for at least two among the predetermined requirements.

For example, a first wireless device out of the two or more wireless devices is associated with a first wireless network and a second wireless device out of the two or more wireless devices is associated with a second wireless network, wherein the first wireless network and the second wireless network are either a same wireless network or different wireless networks.

In an exemplary implementation, features of a signal out of the existing sensing signals are identified using one or more of an identification information that is provided by a wireless device generating the signal, blind signal analysis (BSA), machine learning techniques.

For example, the wireless device is further comprising: a memory configured to store information about a sensing application of a wireless device out of the two or more wireless devices in a first database and/or store sensing capabilities of the two or more wireless devices in a second database.

In an exemplary implementation, the transceiver is further configured to transmit entries of the first database to a wireless device out of the two or more wireless devices and/or transmit entries of the second database to a wireless device out of the two or more wireless devices. Moreover, the corresponding methods are provided including steps performed by any of the above-mentioned processing circuitry implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transceiver is embedded in an integrated circuit, IC.

Any of the apparatuses of the present disclosure may be embodied on an integrated chip. Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications that are within scope of the appended claims.

## Claims

1. A method for scheduling sensing signals for two or more wireless devices, comprising:
determining requirements of sensing performance from the two or more wireless devices;
determining one or more groups of wireless devices having similar requirements of sensing performance, each group comprising one or more wireless devices of the two or more wireless devices;
**characterized by**
determining (S810) existing sensing signals being transmitted;
for each group, comparing (S820) features of existing sensing signals with respective requirements of sensing performance;
providing information about the existing sensing signals to a group out of the one or more groups of wireless devices, if the predetermined requirements for the group are fulfilled.

2. The method according to claim 1, further comprising
if the predetermined requirements for the group are not fulfilled, initiating (S840) generation of a new sensing signal.

3. The method according to claim 2, wherein
initiating (S840) generation of a new sensing signal comprises at least one of
- starting to transmit a new sensing signal, or
- instructing a wireless device out of the two or more wireless devices to start transmitting a new sensing signal.

4. The method according to claim 1, further comprising
if the predetermined requirements for the group are not fulfilled, initiating an adjustment of a signal out of the existing sensing signals such that the predetermined requirements for the group are fulfilled.

5. The method according to claim 4, wherein
initiating an adjustment of the signal out of the existing sensing signals comprises at least one of
- starting to adjust the signal, or
- instructing a wireless device out of the two or more wireless devices to start adjusting the signal.

6. The method according to any of the claims 1 to 5, wherein
the predetermined requirements comprise on one or more out of the characteristics:
- frame structure,
- bandwidth,
- sensing duration,
- sensing start time,
- sensing end time,
- waveform,
- periodicity,
- carrier frequency,
- power,
- beam width,
- beam sweep rate,
- training sequences,
- pilot placement; and
said one or more characteristics differ for at least two among the predetermined requirements.

7. The method according to any of the claims 1 to 6, wherein
a first wireless device out of the two or more wireless devices is associated with a first wireless network and a second wireless device out of the two or more wireless devices is associated with a second wireless network,
wherein the first wireless network and the second wireless network are either a same wireless network or different wireless networks.

8. The method according to any of the claims 1 to 7, wherein
features of a signal out of the existing sensing signals are identified using one or more of
- an identification information that is provided by a wireless device generating the signal,
- blind signal analysis (BSA),
- machine learning techniques.

9. The method according to any of the claims 1 to 8, further comprising
storing information about a sensing application of a wireless device out of the two or more wireless devices in a first database and/or
storing sensing capabilities of the two or more wireless devices in a second database.

10. The method according to claim 9, further comprising
transmitting entries of the first database to a wireless device out of the two or more wireless devices and/or
transmitting entries of the second database to a wireless device out of the two or more wireless devices.

11. A computer program stored in a non-transitory, computer-readable medium, the program comprising code instructions which, when executed on one or more processors of a wireless device, cause the wireless device to perform the steps of the method according to any of claims 1 to 10.

12. A wireless device (2101) for scheduling sensing signals, comprising:
processing circuitry (2120) configured to
determine requirements of sensing performance from two or more wireless devices;
determine one or more groups of wireless devices having similar requirements of sensing performance, each group comprising one or more wireless devices of the two or more wireless devices;
**characterized in that** the processing circuitry (2120) is further configured to
determine (S810) existing sensing signals being transmitted;
for each group, compare (S820) features of existing sensing signals with respective requirements of sensing performance;
a transceiver (2140) configured to
transmit information about the existing sensing signals to a group out of the one or more groups of wireless devices, if the predetermined requirements for the group are fulfilled.

13. The wireless device (2101) according to claim 12, wherein the processing circuitry (2120) is further configured to,
if the predetermined requirements for the group are not fulfilled, initiate generation of a new sensing signal.

14. The wireless device (2101) according to claim 13, wherein
initiating generation of a new sensing signal comprises at least one of starting to transmit a new sensing signal, or
instructing a wireless device out of the two or more wireless devices to start transmitting a new sensing signal.

15. The wireless device (2101) according to claim 12, wherein the processing circuitry (2120) is further configured to,
if the predetermined requirements for the group are not fulfilled, initiate an adjustment of a signal out of the existing sensing signals such that the predetermined requirements for the group are fulfilled.

## Patentansprüche

1. Verfahren zum Koordinieren von Erfassungssignalen für zwei oder mehr Drahtlosvorrichtungen, das umfasst:
Bestimmen von Anforderungen an Erfassungsleistung von den zwei oder mehr Drahtlosvorrichtungen;
Bestimmen einer oder mehrerer Gruppe/n von Drahtlosvorrichtungen mit gleichartigen Anforderungen an Erfassungsleistung, wobei jede Gruppe eine oder mehrere Drahtlosvorrichtung/en der zwei oder mehr Drahtlosvorrichtungen umfasst;
**gekennzeichnet durch**
Bestimmen (S810) vorhandener Erfassungssignale, die gesendet werden;
Vergleichen (S820) von Merkmalen vorhandener Erfassungssignale mit jeweiligen Anforderungen an Erfassungsleistung für jede Gruppe;
Bereitstellen von Informationen über die vorhandenen Erfassungssignale für eine Gruppe der einen oder mehreren Gruppe/n von Drahtlosvorrichtungen, wenn die vorgegebenen Anforderungen für die Gruppe erfüllt sind.

2. Verfahren nach Anspruch 1, das des Weiteren umfasst:
Einleiten (S840) von Erzeugung eines neuen Erfassungssignals, wenn die vorgegebenen Anforderungen für die Gruppe nicht erfüllt sind.

3. Verfahren nach Anspruch 2, wobei
Einleiten (S840) von Erzeugung eines neuen Erfassungssignals umfasst, dass:
- begonnen wird, ein neues Erfassungssignal zu senden, oder/und
- eine Drahtlosvorrichtung der zwei oder mehr Drahtlosvorrichtungen angewiesen wird, Senden eines neuen Erfassungssignals zu beginnen.

4. Verfahren nach Anspruch 1, das des Weiteren umfasst:
Einleiten einer Anpassung eines Signals der vorhandenen Erfassungssignale dahingehend, dass die vorgegebenen Anforderungen für die Gruppe erfüllt werden, wenn die vorgegebenen Anforderungen für die Gruppe nicht erfüllt sind.

5. Verfahren nach Anspruch 4, wobei
Einleiten einer Anpassung des Signals der vorhandenen Erfassungssignale umfasst,
- dass begonnen wird, das Signal anzupassen, oder/und
- eine Drahtlosvorrichtung der zwei oder mehr Drahtlosvorrichtungen angewiesen wird, zu beginnen, das Signal anzupassen.

6. Verfahren nach einem der Ansprüche 1 bis 5, wobei
die vorgegebenen Anforderungen eine oder mehrere der folgenden Eigenschaften umfassen:
- Rahmen-Struktur,
- Bandbreite,
- Erfassungsdauer,
- Erfassungs-Anfangszeit,
- Erfassungs-Endzeit,
- Wellenform,
- Periodizität,
- Trägerfrequenz,
- Leistung,
- Strahlbreite,
- Strahl-Abtastrate,
- Trainingssequenzen,
- Pilot-Positionierung; und
die eine oder mehrere Eigenschaft/en sich für wenigstens zwei der vorgegebenen Anforderungen unterscheidet/unterscheiden.

7. Verfahren nach einem der Ansprüche 1 bis 6, wobei
die erste Drahtlosvorrichtung der zwei oder mehr Drahtlosvorrichtungen mit einem ersten Drahtlos-Netzwerk verbunden ist und eine zweite Drahtlosvorrichtung der zwei oder mehr Drahtlosvorrichtungen mit einem zweiten Drahtlos-Netzwerk verbunden ist, wobei das erste Drahtlos-Netzwerk und das zweite Drahtlos-Netzwerk entweder ein und dasselbe Drahtlos-Netzwerk oder verschiedene Drahtlos-Netzwerke sind.

8. Verfahren nach einem der Ansprüche 1 bis 7, wobei
Merkmale eines Signals der vorhandenen Erfassungssignale anhand von
- eine Identifikations-Information, die von einer das Signal erzeugenden Drahtlosvorrichtung bereitgestellt wird,
- blinder Signalanalyse (BSA) oder/und
- maschinellen Lernmethoden
identifiziert werden.

9. Verfahren nach einem der Ansprüche 1 bis 8, das des Weiteren umfasst
Speichern von Informationen über eine Erfassungs-Anwendung einer Drahtlosvorrichtung der zwei oder mehr Drahtlosvorrichtungen in einer ersten Datenbank und/oder
Speichern von Erfassungsfähigkeiten der zwei oder mehr Drahtlosvorrichtungen in einer zweiten Datenbank.

10. Verfahren nach Anspruch 9, das des Weiteren umfasst:
Senden von Einträgen der ersten Datenbank zu einer Drahtlosvorrichtung der zwei oder mehr Drahtlosvorrichtungen und/oder
Senden von Einträgen der zweiten Datenbank zu einer Drahtlosvorrichtung der zwei oder mehr Drahtlosvorrichtungen.

11. Computerprogramm, das auf einem nichtflüchtigen computerlesbaren Medium gespeichert ist,
wobei das Programm Code-Befehle umfasst, die, wenn sie auf einem oder mehreren Prozessor/en einer Drahtlosvorrichtung ausgeführt werden,
die Drahtlosvorrichtung veranlassen, die Schritte des Verfahrens nach einem der Ansprüche 1 bis 10 durchzuführen.

12. Drahtlosvorrichtung (2101) zum Koordinieren von Erfassungssignalen, die umfasst:
eine Verarbeitungsschaltung (2120), die ausgeführt ist zum:
Bestimmen von Anforderungen an Erfassungsleistung von zwei oder mehr Drahtlosvorrichtungen;
Bestimmen einer oder mehrerer Gruppe/n von Drahtlosvorrichtungen mit gleichartigen Anforderungen an Erfassungsleistung, wobei jede Gruppe eine oder mehrere Drahtlosvorrichtung/en der zwei oder mehr Drahtlosvorrichtungen umfasst;
**dadurch gekennzeichnet, dass** die Verarbeitungsschaltung des Weiteren ausgeführt ist zum:
Bestimmen (S810) vorhandener Erfassungssignale, die gesendet werden;
Vergleichen (S820) von Merkmalen vorhandener Erfassungssignale mit jeweiligen Anforderungen an Erfassungsleistung für jede Gruppe;
einen Sendeempfänger (2140), der ausgeführt ist zum:
Senden von Informationen über die vorhandenen Erfassungssignale zu einer Gruppe der einen oder mehreren Gruppe/n von Drahtlosvorrichtungen, wenn die vorgegebenen Anforderungen für die Gruppe erfüllt sind.

13. Drahtlosvorrichtung (2101) nach Anspruch 12, wobei die Verarbeitungsschaltung (2120) des Weiteren ausgeführt ist zum:
Einleiten von Erzeugung eines neuen Erfassungssignals, wenn die vorgegebenen Anforderungen für die Gruppe nicht erfüllt sind.

14. Drahtlosvorrichtung (2101) nach Anspruch 13, wobei
Einleiten von Erzeugung eines neuen Erfassungssignals umfasst,
dass begonnen wird, ein neues Erfassungssignal zu senden, oder/und
eine Drahtlosvorrichtung der zwei oder mehr Drahtlosvorrichtungen angewiesen wird, Senden eines neuen Erfassungssignals zu beginnen.

15. Drahtlosvorrichtung (2101) nach Anspruch 12, wobei die Verarbeitungsschaltung (2120) des Weiteren ausgeführt ist zum:
Einleiten einer Anpassung eines Signals der vorhandenen Erfassungssignale dahingehend, dass die vorgegebenen Anforderungen für die Gruppe erfüllt werden, wenn die vorgegebenen Anforderungen für die Gruppe nicht erfüllt sind.

## Revendications

1. Procédé de planification de signaux de détection pour deux ou plusieurs dispositifs sans fil, comprenant les étapes consistant à :
déterminer des exigences de performance de détection à partir des deux ou plusieurs dispositifs sans fil ;
déterminer un ou plusieurs groupes de dispositifs sans fil ayant des exigences similaires de performance de détection, chaque groupe comprenant un ou plusieurs dispositifs sans fil des deux ou plusieurs dispositifs sans fil ;
**caractérisé par**
la détermination (S810) des signaux de détection existants étant transmis ;
pour chaque groupe, la comparaison (S820) des aspects des signaux de détection existants à des exigences respectives de performance de détection ;
la fourniture d'informations sur les signaux de détection existants à un groupe parmi un ou plusieurs groupes de dispositifs sans fil, si les exigences prédéterminées pour le groupe sont remplies.

2. Procédé selon la revendication 1, comprenant en outre
si les exigences prédéterminées pour le groupe ne sont pas remplies, l'initiation (S840) d'une génération d'un nouveau signal de détection.

3. Procédé selon la revendication 2, dans lequel
l'initiation (S840) de la génération d'un nouveau signal de détection comprend au moins l'un parmi
- le démarrage pour transmettre un nouveau signal de détection, ou
- l'instruction d'un dispositif sans fil parmi deux ou plusieurs dispositifs sans fil de démarrer une transmission d'un nouveau signal de détection.

4. Procédé selon la revendication 1, comprenant en outre
si les exigences prédéterminées pour le groupe ne sont pas remplies, l'initiation d'un ajustement d'un signal hors des signaux de détection existants de sorte que les exigences prédéterminées pour le groupe sont remplies.

5. Procédé selon la revendication 4, dans lequel
l'initiation d'un ajustement du signal parmi les signaux de détection existants comprend au moins l'un parmi
- le démarrage pour ajuster le signal, ou
- l'instruction d'un dispositif sans fil parmi les deux ou plusieurs dispositifs sans fil de démarrer l'ajustement du signal.

6. Procédé selon l'une quelconque des revendications 1 à 5, dans lequel
les exigences prédéterminées comprennent une ou plusieurs des caractéristiques :
- structure de trame,
- largeur de bande,
- durée de détection,
- temps de début de détection,
- temps de fin de détection,
- forme d'onde,
- périodicité,
- fréquence porteuse,
- puissance,
- largeur de faisceau,
- taux de balayage de faisceau,
- séquences d'entraînement,
- mise en place du pilote ; et
lesdites une ou plusieurs caractéristiques diffèrent pour au moins deux parmi les exigences prédéterminées.

7. Procédé selon l'une quelconque des revendications 1 à 6, dans lequel
un premier dispositif sans fil parmi les deux ou plusieurs dispositifs sans fil est associé à un premier réseau sans fil et un second dispositif sans fil parmi les deux ou plusieurs dispositifs sans fil est associé à un second réseau sans fil,
dans lequel le premier réseau sans fil et le second réseau sans fil sont soit un réseau sans fil identique soit des réseaux sans fil différents.

8. Procédé selon l'une quelconque des revendications 1 à 7, dans lequel
des aspects d'un signal parmi les signaux de détection existants sont identifiés en utilisant l'une ou plusieurs parmi
- une information d'identification qui est fournie par un dispositif sans fil générant le signal,
- une analyse du signal aveugle (BSA),
- des techniques d'apprentissage machine.

9. Procédé selon l'une quelconque des revendications 1 à 8, comprenant en outre
le stockage d'informations au sujet d'une application de détection d'un dispositif sans fil parmi les deux ou plusieurs dispositifs sans fil dans une première base de données et/ou
un stockage des capacités de détection des deux ou plusieurs dispositifs sans fil dans une seconde base de données.

10. Procédé selon la revendication 9, comprenant en outre
la transmission d'entrées de la première base de données à un dispositif sans fil parmi les deux ou plusieurs dispositifs sans fil et/ou
la transmission d'entrées de la seconde base de données à un dispositif sans fil parmi les deux ou plusieurs dispositifs sans fil.

11. Programme informatique stocké dans un support non transitoire, lisible par ordinateur, le programme comprenant des instructions de code qui, lorsqu'elles sont exécutées sur un ou plusieurs processeurs d'un dispositif sans fil, entraînent le dispositif sans fil à effectuer les étapes du procédé selon l'une quelconque des revendications 1 à 10.

12. Dispositif sans fil (2101) pour planifier des signaux de détection, comprenant :
une circuiterie de traitement (2120) configurée pour
déterminer des exigences de performance de détection parmi deux ou plusieurs dispositifs sans fil ;
déterminer un ou plusieurs groupes de dispositifs sans fil ayant des exigences similaires de performance de détection, chaque groupe comprenant un ou plusieurs dispositifs sans fil des deux ou plusieurs dispositifs sans fil ;
**caractérisé en ce que** la circuiterie de traitement (2120) est en outre configurée pour
déterminer (S810) des signaux de détection existants qui sont transmis ;
pour chaque groupe, comparer (S820) des aspects des signaux de détection existants à des exigences respectives de performance de détection ;
un émetteur-récepteur (2140) configuré pour
transmettre des informations sur les signaux de détection existants à un groupe parmi le un ou plusieurs groupes de dispositifs sans fil, si les exigences prédéterminées pour le groupe sont remplies.

13. Dispositif sans fil (2101) selon la revendication 12, dans lequel la circuiterie de traitement (2120) est en outre configurée pour,
si les exigences prédéterminées pour le groupe ne sont pas remplies, initier une génération d'un nouveau signal de détection.

14. Dispositif sans fil (2101) selon la revendication 13, dans lequel
l'initiation d'une génération d'un nouveau signal de détection comprend au moins l'un parmi
le démarrage pour transmettre un nouveau signal de détection, ou
l'instruction d'un dispositif sans fil parmi les deux ou plusieurs dispositifs sans fil de démarrer une transmission d'un nouveau signal de détection.

15. Dispositif sans fil (2101) selon la revendication 12, dans lequel la circuiterie de traitement (2120) est en outre configurée pour,
si les exigences prédéterminées pour le groupe ne sont pas remplies, initier un ajustement d'un signal parmi les signaux de détection existants de sorte que les exigences prédéterminées pour le groupe sont remplies.
